# EUROPEAN PATENT SPECIFICATION

(11) **EP 1 517 590 B1**
(45) Date of publication and mention of the grant of the patent: **30.12.2009**
(21) Application number: 04255602.7
(22) Date of filing: 16.09.2004
(51) Int. Cl.: H05B 41/04, H05B 41/288

(54) **Starting unit for use in a high intensity discharge lamp lighting device**
Zündungseinheit für eine Starkstromentladungslampenanordnung
Module d' amorçage pour dispositif d' éclairage à lampe haute pression

(30) Priority: 18.09.2003 JP 2003326512; 19.09.2003 JP 2003328396; 05.02.2004 JP 2004029373; 31.03.2004 JP 2004107978; 30.06.2004 JP 2004192867; 01.07.2004 JP 2004195599; 01.07.2004 JP 2004195600
(43) Date of publication of application: 23.03.2005
(73) Proprietor: Toshiba Lighting & Technology Corporation, Shinagawa-ku, Tokyo (JP)
(72) Inventor: Kamata, Mashiko Toshiba Lighting & Technology Corp, Shinagawa-ku Tokyo (JP); Mita, Kazutoshi Toshiba Lighting & Technology Corp, Shinagawa-ku Tokyo (JP); Shiohama, Hirochika Toshiba Lighting & Tech. Corp., Shinagawa-ku Tokyo (JP); Terasaka, Hiroshi Toshiba Lighting & Tech. Corp., Shinagawa-ku Tokyo (JP)
(74) Representative: Jennings, Nigel Robin

(56) References cited:
- EP-A- 0 411 617
- EP-A- 0 507 396
- EP-A- 1 121 003
- EP-A- 1 227 706
- EP-A- 1 244 334
- DE-A1- 3 212 339
- FR-A- 2 686 762
- FR-A- 2 820 942
- US-A- 4 527 098
- US-A- 5 962 981
- US-A1- 2003 062 853

## Description

The present invention relates to a high intensity discharge lamp lighting device which lights/controls a high intensity discharge lamp, a starting device for use in the high intensity discharge lamp lighting device, and an illuminating apparatus using the high intensity discharge lamp lighting device.

In a high intensity discharge lamp lighting device which contains a starting unit to produce a high voltage pulse for starting a high intensity discharge lamp, the lighting device has heretofore been electrically arranged in the vicinity of the high intensity discharge lamp. When a wiring distance between the starting unit and the high intensity discharge lamp is short, the high voltage pulse is applied to the high intensity discharge lamp without being attenuated, and therefore any problem does not occur in a starting property. However, the wiring distance between the lighting device and the high intensity discharge lamp lengthens because of convenience in installing appliances. In this case, a stray capacitance due to a wiring length or an inductance component increases, the high voltage pulse is largely attenuated, and the discharge lamp cannot be lit.

To solve a problem, a starting unit is known in which output switching means for connecting a plurality of capacitors in parallel with a main capacitor of a pulse producing circuit by an operation from the outside is electrically arranged. When the distance between the starting unit and the discharge lamp lengthens, the number of the capacitors connected in parallel with the main capacitor is increased to enlarge the whole capacity, and an appropriate high voltage pulse is produced in accordance with the distance (see, for example, Jpn. Pat. Appln. KOKAI Publication No. 5-283180).

Another constitution is known in which a high intensity discharge lamp stabilizer is electrically arranged apart from an illuminating appliance, a booster is electrically arranged on the side of the high intensity discharge lamp stabilizer, and a high intensity discharge lamp and a high-voltage pulse generator are electrically arranged in the illuminating appliance. A high voltage obtained by superposing a high voltage from the booster upon a non-load secondary voltage from the high intensity discharge lamp stabilizer is output to the high-voltage pulse generator, and in the high-voltage pulse generator, a high-voltage pulse is further superposed upon the input high voltage, and applied to the high intensity discharge lamp (see, for example, Jpn. UM Registration No. 2598521, and Jpn. Pat. Appln. KOKAI Publication No. 8-45678).

However, since the wiring length between the starting unit and the discharge lamp differs with an installation place, an installation position or the like, the distance has to be adjusted by the operation of the output switching means every installation in the Jpn. Pat. Appln. KOKAI Publication No. 5-283180. Since a plurality of capacitors and the output switching means are electrically arranged, there has been a problem that the starting unit is entirely enlarged.

Moreover, as described in the Jpn. UM Registration No. 2598521 and Jpn. Pat. Appln. KOKAI Publication No. 8-45678, in the constitution in which the high-voltage pulse generator takes in a high voltage produced on the stabilizer side as such, superposes a high-voltage pulse upon the taken high voltage, and applies the voltage to the high intensity discharge lamp, each element of the high-voltage pulse generator is sometimes adversely affected by the high voltage from the stabilizer side.

An object of the present invention is to provide a high intensity discharge lamp lighting device capable of securely lighting a high intensity discharge lamp even in a case where a distance between the lighting device and the high intensity discharge lamp is large, a starting unit for use in the high intensity discharge lamp lighting device, and an illuminating apparatus using the high intensity discharge lamp lighting device.

One aspect of the invention provides a high intensity discharge lamp lighting device according to claim 1.

Other aspects of the invention are defined in the sub-claims.

The invention can be more fully understood from the following detailed description when taken in conjunction with the accompanying drawing, in which:
FIG. 1 is a block diagram in a case where a high intensity discharge lamp is directly connected to a lighting device useful for understanding embodiments of the present invention;
FIG. 2 is a diagram showing a concrete circuit constitution of the lighting device according to Fig. 1;
FIG. 3 is a block diagram in a case where the high intensity discharge lamp is connected to the lighting device via a second starting unit according to Figs. 1, 14 and 23-26;
FIG. 4 is a diagram showing a concrete circuit constitution of the second starting unit ;
FIG. 5A is a diagram showing an output voltage waveform of the second starting unit;
FIG. 5B is a diagram showing a charged voltage waveform of a capacitor;
FIG. 6 is a diagram showing a concrete circuit constitution of the second starting unit ;
FIG. 7 is a diagram showing a concrete circuit constitution of the second starting unit useful for understanding;
FIG. 8A is a diagram showing a charged voltage waveform of an electrolytic capacitor of the second starting unit;
FIG. 8B is a waveform diagram of a high voltage pulse output from the second starting unit ;
FIG. 9 is a diagram showing a high voltage pulse production timing of the second starting unit ;
FIG. 10 is a diagram showing another concrete circuit constitution of the second starting unit useful for understanding the present invention;
FIG. 11 is a diagram showing another concrete circuit constitution of the second starting unit useful for understanding the present invention;
FIG. 12 is a diagram showing a concrete circuit constitution of another second starting unit useful for understanding the present invention;
FIG. 13 is a diagram showing a constitution of an illuminating apparatus useful for understanding the present invention;
FIG. 14 is a diagram showing a concrete circuit constitution of the lighting device useful for understanding the present invention;
FIG. 15 is a diagram showing a concrete circuit constitution of the second starting unit ;
FIG. 16A is a diagram showing an output voltage waveform of the second starting unit;
FIG. 16B is a diagram showing the charged voltage waveform of the capacitor of the second starting unit ;
FIG. 17 is a circuit constitution diagram of the high intensity discharge lamp lighting device useful for understanding the present invention;
FIG. 18 is a diagram showing a circuit constitution of the second starting unit ;
FIG. 19 is a diagram showing an example of a voltage waveform applied to the high intensity discharge lamp at the time of starting/lighting useful for understanding the invention;
FIG. 20 is a diagram showing another example of the voltage waveform applied to the high intensity discharge lamp at the time of the starting/lighting ;
FIG. 21 is a diagram showing another circuit constitution of the second starting unituseful for understanding the invention;
FIG. 22 is a diagram showing an example of the voltage waveform applied to the high intensity discharge lamp at the time of the starting/lighting useful for understanding the invention;
FIG. 23 is a diagram showing a concrete circuit constitution of the lighting device according to an embodiment of the invention;
FIG. 24 is a diagram showing a concrete circuit constitution of the second starting unit according to the embodiment;
FIG. 25 is a diagram showing a concrete circuit constitution of the second starting unit according to a second embodiment of the present invention; and
FIG. 26 is a diagram showing a concrete circuit constitution of the lighting device according to a third embodiment of the present invention.

Embodiments of the present invention will be described hereinafter with reference to the drawings.

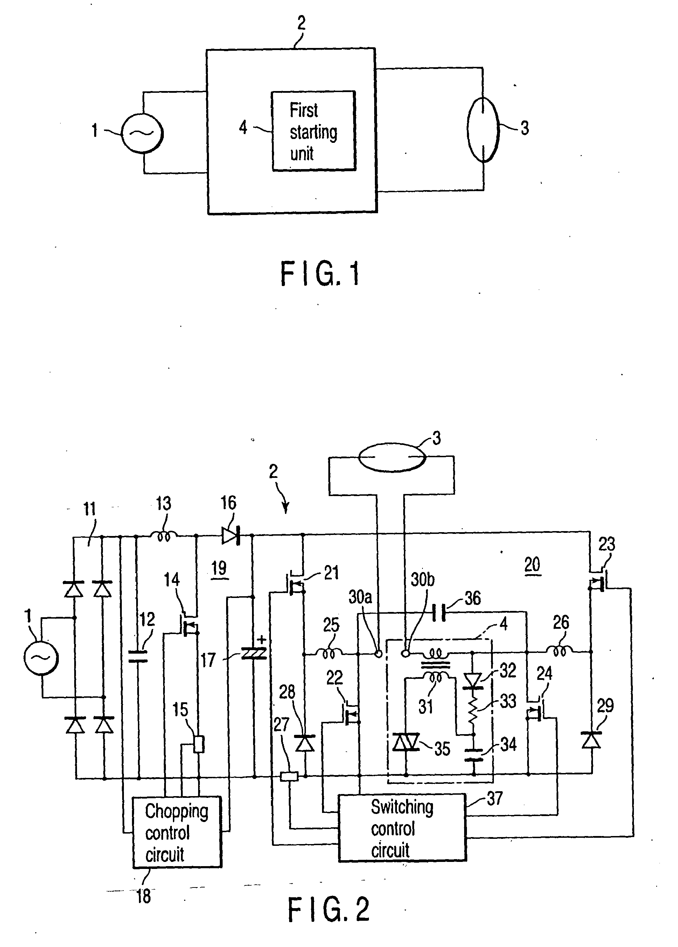

As shown in FIG. 1, a lighting device 2 is connected to a commercial alternating power source 1, and a high intensity discharge lamp 3 is connected to an output terminal of the lighting device 2. The lighting device 2 contains a first starting unit 4 which produces a high voltage pulse to start the high intensity discharge lamp 3.

The lighting device 2 is electrically arranged apart from the high intensity discharge lamp 3 in this manner. However, when a distance from the high intensity discharge lamp 3 is short, a wiring length between the lighting device 2 and the high intensity discharge lamp 3 is short, and therefore the high intensity discharge lamp 3 is directly connected to the lighting device 2.

A constitution of the lighting device 2 will be concretely described. As shown in FIG. 2, the commercial alternating power source 1 is connected to an input terminal of a transmission-wave rectification circuit 11 constituted of a diode bridge, an output terminal of the transmission-wave rectification circuit 11 is connected in parallel with a capacitor 12, and a series circuit of an MOS-type first field-effect transistor (FET) 14 and a first current detection element 15 is connected in parallel via a first inductor 13. Moreover, the series circuit of the first FET 14 and first current detection element 15 is connected in parallel with a smoothing capacitor 17 constituted of an electrolytic capacitor via a diode 16 in a forward direction.

The first inductor 13, first FET 14, diode 16, and smoothing capacitor 17 constitute a booster chopper circuit 19. In the booster chopper circuit 19, a chopping control circuit 18 is electrically arranged, and an input voltage from the transmission-wave rectification circuit 11, an output voltage produced between opposite ends of the smoothing capacitor 17, and an output voltage from the first current detection element 15 are input into the chopping control circuit 18. The FET 14 is controlled to turn on/off, and a turn-off timing of the FET 14 is controlled.

A polarity reversing circuit and regulator circuit 20 is connected to an output terminal of the booster chopper circuit 19, that is, between the opposite ends of the smoothing capacitor 17. The polarity reversing circuit and regulator circuit 20 includes MOS-type second, third, fourth, fifth FETs 21, 22, 23, 24, second, third inductors 25, 26, and the first starting unit 4.

That is, the second FET 21, the second inductor 25, and the third FET 22 are connected in series, a drain terminal of the second FET 21 is connected to a positive electrode terminal of the smoothing capacitor 17, and a source terminal of the third FET 22 is connected to a negative electrode terminal of the smoothing capacitor 17 via a second current detection element 27.

Moreover, the fourth FET 23, the third inductor 26, and the fifth FET 24 are connected in series, the drain terminal of the fourth FET 23 is connected to the positive electrode terminal of the smoothing capacitor 17, and the source terminal of the fifth FET 24 is connected to the negative electrode terminal of the smoothing capacitor 17 via the second current detection element 27.

Furthermore, a diode 28, whose polarity is set to be reverse to that of the third FET 22, is connected in parallel with the series circuit of the second inductor 25 and third FET 22, and a diode 29, whose polarity is set to be reverse to that of the fifth FET 24, is connected in parallel with the series circuit of the third inductor 26 and fifth FET 24.

A connection point between the second inductor 25 and the third FET 22 is connected to one terminal 30a connected to the high intensity discharge lamp 3, and a connection point between the third inductor 26 and the fifth FET 24 is connected to the other terminal 30b connected to the high intensity discharge lamp 3 via a secondary winding of an igniter transformer 31 constituting the first starting unit 4.

The first starting unit 4 is constituted by a high voltage pulse generation circuit in which the fifth FET 24 is connected in parallel with a series circuit of a diode 32, a resistance 33, and a capacitor 34, and the capacitor 34 is connected in parallel with a series circuit of a primary winding of the igniter transformer 31 and a bidirectional two-terminal thyristor 35.

Moreover, a capacitor 36 for leveling a high-frequency component of a voltage applied to the high intensity discharge lamp 3 is connected between a connection point between the second inductor 25 and the third FET 22 and that between the third inductor 26 and the fifth FET 24.

The polarity reversing circuit and regulator circuit 20 further includes a switching control circuit 37, takes in an output voltage from the second current detection element 27, and switches/controls the second, third, fourth, and fifth FETs 21, 22, 23, 24 in such a manner that a flowing current becomes constant.

In this case, the second, fourth FETs 21, 23 are switched/controlled at a high frequency of several tens of KHz, the third, fifth FETs 22, 24 are switched/controlled, for example, at a low frequency of 100 Hz, and an off-period in which high-frequency switching is not performed is electrically arranged in synchronization with the third, fifth FETs 22, 24 in the second, fourth FETs 21, 23. That is, the second FET 21 performs a switching operation at a high frequency in synchronization with a period in which the fifth FET 24 is turned on. In a period in which the fifth FET 24 is turned off, the second FET 21 also stops the high-frequency switching operation and continues its off-state. The fourth FET 23 performs the switching operation at a high frequency in synchronization with a period in which the third FET 22 is on. In a period in which the third FET 22 is off, the fourth FET 23 also stops the high-frequency switching operation and continues its off-state.

The lighting device 2 supplies a low-frequency power of a rectangular wave of 100 Hz to the high intensity discharge lamp 3 in this manner. It is to be noted that the low-frequency power is not necessarily limited to the rectangular wave, and may be a sinusoidal wave. The power frequency is not limited to 100 Hz, and may be a high-frequency power.

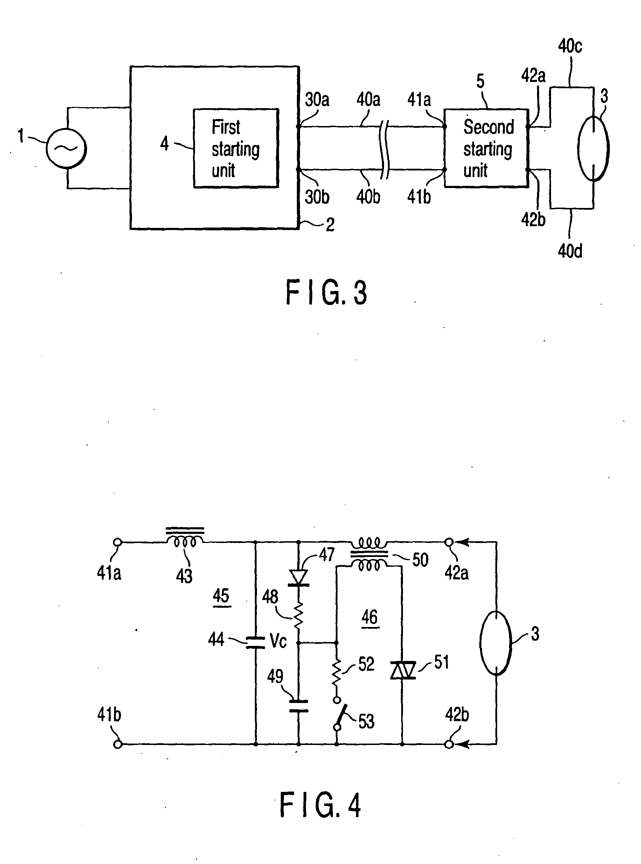

Moreover, the lighting device 2 is electrically arranged apart from the high intensity discharge lamp 3. Additionally, when the distance from the high intensity discharge lamp 3 is long, the wiring length between the lighting device 2 and the high intensity discharge lamp 3 lengthens. In this case, as shown in FIG. 3, a second starting unit 5 is connected between the lighting device 2 and the high intensity discharge lamp 3. Additionally, the second starting unit 5 is brought close to and connected to the high intensity discharge lamp 3. That is, the high intensity discharge lamp 3 is disconnected from the terminals 30a, 30b, instead the terminal 30a, 30b is connected to one end of a long-distance wiring 40a, 40b, and the other end of the wiring 40a, 40b is connected to input terminals 41a, 41b of the second starting unit 5. Moreover, output terminals 42a, 42b of the second starting unit 5 are connected to the high intensity discharge lamp 3 via short-distance wirings 40c, 40d. That is, the length of the wiring 40a, 40b is shorter than that of the wiring 40c, 40d.

The second starting unit 5 receives a supply of a low-frequency power from the lighting device 2, and operates. As shown in FIG. 4, a capacitor 44 is connected between the input terminals 41a, 41b via an inductor 43. The inductor 43 and capacitor 44 constitute high voltage pulse reduction means 45 which absorbs and reduces the high voltage pulse. It is to be noted that the inductor 43 may not be electrically arranged depending on the situation. The capacitor 44 is preferably 0.033 µF or more, here a capacitor of 0.1 µF is used.

Moreover, the capacitor 44 is connected to high voltage pulse generation means 46. In the high voltage pulse generation means 46, the capacitor 44 is connected in parallel with a series circuit of a diode 47, a resistance 48, and a capacitor 49, and the capacitor 49 is connected in parallel with a series circuit of the primary winding of an igniter transformer 50 and a bidirectional two-terminal thyristor 51. Moreover, a connection point between the inductor 43 and the capacitor 44 is connected to the output terminal 42a via the secondary winding of the igniter transformer 50, and a connection point between the input terminal 41b and the capacitor 44 is connected to the output terminal 42b. The capacitor 49 is connected in parallel with an operation switch 53 which is an operation part for stopping the generation of the high voltage pulse via a resistance 52. The operation switch 53 is a switch operated outside.

In the constitution, in the lighting device 2, a power voltage is boosted by an on/off operation of the first FET 14, the boosted direct-current voltage is charged into the smoothing capacitor 17, and the direct-current voltage is a power source of the polarity reversing circuit and regulator circuit 20.

In the polarity reversing circuit and regulator circuit 20, the third FET 22 and fifth FET 24 are alternately controlled to turn on/off in a low-frequency cycle, the second FET 21 performs the high-frequency switching operation only in a period in which the fifth FET 24 is on, and the fourth FET 23 performs a high-frequency switching operation only in a period in which the third FET 22 is on.

Moreover, before the high intensity discharge lamp 3 lights, when the fourth FET 23 turns on, a charged current flows from the positive electrode terminal of the smoothing capacitor 17 to the fourth FET 23→the third inductor 26→the diode 32→the resistance 33→the capacitor 34→the second current detection element 27→the negative electrode terminal of the smoothing capacitor 17, and the capacitor 34 is charged. This charging is repeated every on-operation of the fourth FET 23 until the charged voltage of the capacitor 34 reaches a breakover voltage of the bidirectional two-terminal thyristor 35. Then, the bidirectional two-terminal thyristor 35 conducts.

When the bidirectional two-terminal thyristor 35 conducts, a discharged current momentarily flows through the primary winding of the igniter transformer 31 from the capacitor 34, and a high voltage pulse of several KVs is generated in the secondary winding of the igniter transformer 31 and applied to the high intensity discharge lamp 3.

When the lighting device 2 and high intensity discharge lamp 3 are installed in a place where they are connected to each other via a short wiring, the terminals 30a, 30b of the lighting device 2 is connected to the high intensity discharge lamp 3 via a short-distance wiring. That is, the constitution of FIG. 1 is obtained. In this case, since the wiring distance to the high intensity discharge lamp 3 is short, the high voltage pulse is applied to the high intensity discharge lamp 3 substantially without being attenuated. When this is repeated, the high intensity discharge lamp 3 starts lighting before long. When the wiring distance to the high intensity discharge lamp 3 is short, the starting/lighting can be securely performed by the high voltage pulse from the first starting unit 4.

After the high intensity discharge lamp 3 lights, the lamp voltage of the high intensity discharge lamp 3 drops, for example, to about 100 to 130 V from about 200 V, the charged voltage of the capacitor 34 does not reach the breakover voltage of the bidirectional two-terminal thyristor 35, and the output of the high voltage pulse from the first starting unit 4 is stopped. That is, after the high intensity discharge lamp 3 lights, the generation of the high voltage pulse can be securely stopped.

Moreover, in a period in which the fifth FET 24 is on, when the second FET 21 turns on, a current flows from the positive electrode terminal of the smoothing capacitor 17 to the second FET 21→the inductor 25→the high intensity discharge lamp 3→the secondary winding of the igniter transformer 31→the fifth FET 24→the second current detection element 27→the negative electrode terminal of the smoothing capacitor 17. Moreover, when the second FET 21 turns off, a current flows through the inductor 25→the high intensity discharge lamp 3→the secondary winding of the igniter transformer 31→the fifth FET 24→the diode 28→the inductor 25, and this is repeated every turning-on/off of the second FET 21.

Furthermore, in a period in which the third FET 22 is on, when the fourth FET 23 turns on, a current flows from the positive electrode terminal of the smoothing capacitor 17 to the fourth FET 23→the inductor 26→the secondary winding of the igniter transformer 31→the high intensity discharge lamp 3→the third FET 22→the second current detection element 27→the negative electrode terminal of the smoothing capacitor 17. Moreover, when the fourth FET 23 turns off, the current flows to the inductor 26→the secondary winding of the igniter transformer 31→the high intensity discharge lamp 3→the third FET 22→the diode 29→the inductor 26, and this is repeated every turning on/off of the fourth FET 23.

In this manner, the high intensity discharge lamp 3 maintains the lighting at a low frequency of about 100 Hz. A voltage waveform supplied to the high intensity discharge lamp 3 from the polarity reversing circuit and regulator circuit 20 at the lighting time forms a low-frequency rectangular wave. Moreover, the high-frequency component laid on the rectangular wave is removed by the capacitor 36.

Moreover, when the lighting device 2 and high intensity discharge lamp 3 are installed in a place where they are connected to each other via a long wiring, the high voltage pulse generated from the first starting unit 4 of the lighting device 2 is attenuated halfway, and therefore the high intensity discharge lamp 3 cannot be smoothly started/lit. In this case, as shown in FIG. 3, the terminals 30a, 30b of the lighting device 2 are connected to one end of each of the long wirings 40a, 40b, the other end of each of the wirings 40a, 40b is connected to the input terminals 41a, 41b of the second starting unit 5, and the output terminals 42a, 42b of the second starting unit 5 are connected to the high intensity discharge lamp 3 via short wirings 40c, 40d.

In this constitution, a low-frequency power from the lighting device 2 is supplied to operate the second starting unit 5. Moreover, a high voltage pulse generated from the first starting unit 4 of the lighting device 2 is absorbed and reduced by the high voltage pulse reduction means 45 of the second starting unit 5. Therefore, in the second starting unit 5, adverse affects such as damages of the circuit elements by the high voltage pulse from the lighting device 2 can be removed. When the input terminal 41a is a positive electrode, the capacitor 49 is charged via the diode 47 and resistance 48 by the rectangular-wave voltage output from the lighting device 2. Moreover, when the charged voltage of the capacitor 49 reaches the breakover voltage of the bidirectional two-terminal thyristor 51, the bidirectional two-terminal thyristor 51 conducts.

When the bidirectional two-terminal thyristor 51 conducts, the discharged current from the capacitor 49 momentarily flows through the primary winding of the igniter transformer 50, and a high voltage pulse of several kilovolts is generated in the secondary winding of the igniter transformer 50, and applied to the high intensity discharge lamp 3. Since the distance between the second starting unit 5 and the high intensity discharge lamp 3 is short, the high voltage pulse is hardly attenuated, and is applied to the high intensity discharge lamp 3.

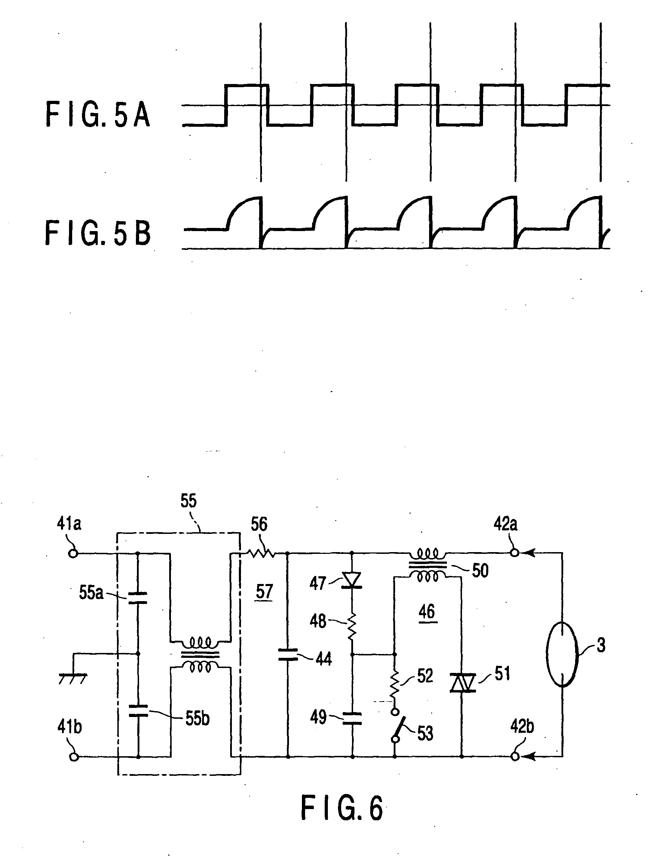

Moreover, when the high voltage pulse is set in such a manner as to be generated once every time the input terminal 41a becomes the positive electrode, voltage waveforms are output from the output terminals 42a, 42b of the second starting unit 5 as shown in FIG. 5A, and the high intensity discharge lamp 3 is securely started/lit before long. A charged voltage V_{C} of the capacitor 49 in this operation changes as shown in FIG. 5B. That is, charging/discharging is performed only while the input terminal 41a is the positive electrode. While the input terminal 41b is the positive electrode, the charging is stopped.

Moreover, when the high intensity discharge lamp 3 starts lighting, a lamp voltage drops, therefore the charged voltage of the capacitor 49 does not reach the breakover voltage of the bidirectional two-terminal thyristor 51, and the output of the high voltage pulse from the second starting unit 5 is stopped. That is, after lighting the high intensity discharge lamp 3, the generation of the high voltage pulse can be securely stopped. Moreover, after the lighting, the lighting is maintained by the low-frequency power from the lighting device 2.

Whether the wiring distance between the lighting device 2 and the high intensity discharge lamp 3 is short or long in this manner, the same lighting device 2 is used. That is, the lighting device 2 can be used in common. Therefore, the lighting device does not have to be changed while checking situations of the wiring, and operability can be enhanced. Moreover, when the wiring distance is long, the second starting unit 5 may be brought close to the high intensity discharge lamp 3 and connected between the lighting device 2 and the high intensity discharge lamp 3. When the wiring distance is short, the high intensity discharge lamp 3 may be directly connected to the lighting device 2. The number of components to be attached can be reduced as compared with the long wiring distance, and an attaching operation is facilitated.

Moreover, it is difficult to start/light the high intensity discharge lamp 3 in the last stage of its life. In this case, since the high intensity discharge lamp 3 does not light, the high voltage pulse continues to be generated from the second starting unit 5. When this state occurs, the high intensity discharge lamp 3 is replaced with a new lamp. In this case, the application of the high voltage pulse to the high intensity discharge lamp 3 needs to be stopped.

However, when the original power source supplying the power to the lighting device is cut for this purpose, and when a large number of high intensity discharge lamp lighting devices are operated by the same power source, a problem occurs that all the lamps have to be turned off. When this device is used, the high intensity discharge lamp can be replaced without cutting the original power supply.

That is, when the high intensity discharge lamp 3 is replaced with a new lamp, the operation switch 53 is operated to bring the switch into an on-state. Accordingly, since the charged voltage V_{C} of the capacitor 49 does not reach the breakover voltage of the bidirectional two-terminal thyristor 51, the application of the high voltage pulse from the second starting unit 5 to the high intensity discharge lamp 3 is stopped. Therefore, the high intensity discharge lamp 3 may be replaced with a new lamp in this state. Since the generation of the high voltage pulse from the second starting unit 5 is stopped, noises by the high voltage pulse can be prevented from being generated, and the high voltage pulse can be prevented from being generated uselessly.

Moreover, after the replacement, when the operation switch 53 is operated again to bring this switch into an off-state, the charged voltage V_{C} of the capacitor 49 reaches the breakover voltage of the bidirectional two-terminal thyristor 51 again, and the application of the high voltage pulse from the second starting unit 5 to the high intensity discharge lamp 3 is resumed. Therefore, the replaced high intensity discharge lamp 3 can be started/lit.

It is to be noted that here the application of the high voltage pulse from the second starting unit 5 to the high intensity discharge lamp 3 is directly stopped using the operation switch 53. However, for example, when a timer is electrically arranged in the lighting device 2, the usual high intensity discharge lamp does not light over a time sufficiently longer than a time when the lamp securely starts/lights after the starting, and the high voltage pulse continues to be generated, time is up in the timer, and the output of the lighting device may be stopped. In this case, a reset switch for canceling the output stop of the lighting device is electrically arranged in the second starting unit 5. When the high intensity discharge lamp is replaced, the reset switch is operated, and the stopped state of the output may be canceled.

It is to be noted that in the embodiment, as the lighting device 2, a type of the device which continues generating the high voltage pulse at a constant interval until the high intensity discharge lamp 3 starts lighting is used, but the present invention is not limited to this type. Even if a type of the device for intermittently generating the high voltage pulse with a certain rest period until the high intensity discharge lamp 3 starts lighting is used, there is not any problem.

A modification of the second starting unit 5 will now be described. It is to be noted that the same parts as those of the above-described embodiment are denoted with the same reference numerals and detailed description thereof is omitted. The constitution of the lighting device 2 is the same as that of Fig 2, and the whole constitution is the same as that of FIG. 3.

In a second starting unit 5, as shown in FIG. 6, a noise filter 55 is connected between input terminals 41a, 41b. Moreover, in the noise filter 55, a series circuit in which a pair of capacitors 55a, 55b are connected in series is electrically arranged, and a connection point between the capacitors 55a, 55b is grounded.

A capacitor 44 is connected between output terminals of the noise filter 55 via a resistance 56. The resistance 56 and the capacitor 44 constitute high voltage pulse reduction means 57 for absorbing and reducing the high voltage pulse.

The noise filter 55 is electrically arranged in an input circuit which is the previous stage of the high voltage pulse generation means 46, influences of noises from long wirings 40a, 40b can be removed. It is to be noted that in the other respects, functions/effects similar to those of the above-described embodiment are produced.

A modification of the second starting unit 5 will now be described. It is to be noted that the same parts as those of the above-described embodiment are denoted with the same reference numerals and detailed description thereof is omitted. The constitution of the lighting device 2 is the same as that of the first embodiment, and the whole constitution is the same as that of FIG. 3.

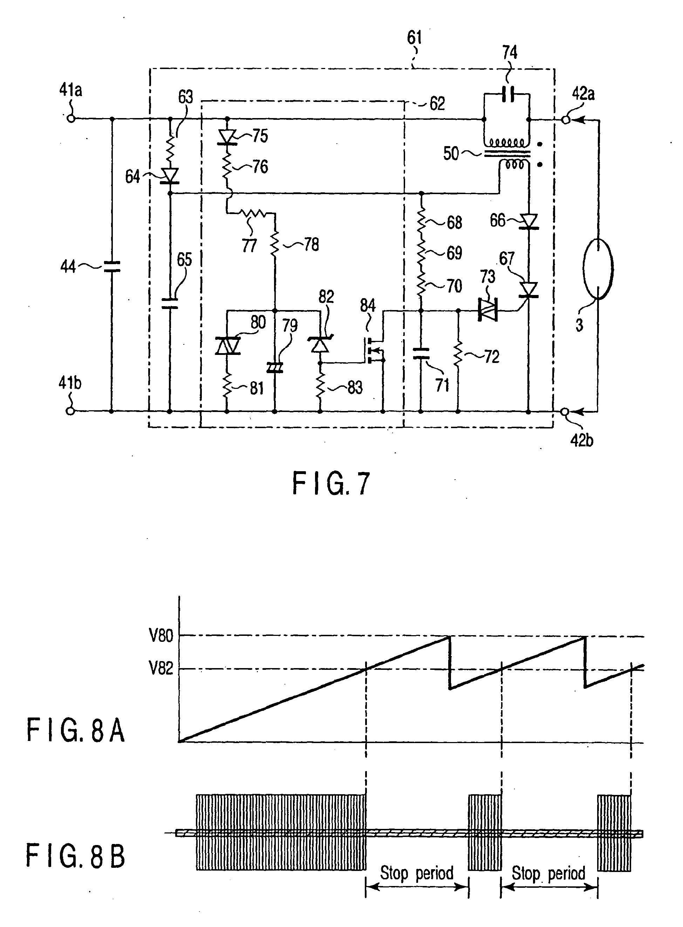

In a second starting unit 5, as shown in FIG. 7, a capacitor 44 constituting high voltage pulse reduction means is connected between input terminals 41a, 41b. High voltage pulse generation means 61 and intermittent operation control means 62 are electrically arranged.

In the high voltage pulse generation means 61, a resistance 63, a diode 64 in a forward polarity and a capacitor 65 are electrically arranged in series between the input terminals 41a, 41b. Moreover, the capacitor 65 is connected in parallel with a series circuit of a primary winding of an igniter transformer 50 and a unilateral three-terminal thyristor 67 via a diode 66 in a forward polarity. The capacitor 65 is connected in parallel with a capacitor 71 via resistances 68, 69, 70 connected in series. As the capacitor 65, for example, a value of about 0.68 µF is used.

The capacitor 71 is connected in parallel with a resistance 72, and connected to a gate and cathode of the three-terminal thyristor 67 via a bidirectional two-terminal thyristor 73.

The input terminal 41a is connected to output terminal 42a via a parallel circuit of a secondary winding of the igniter transformer 50 and a capacitor 74, and the input terminal 41b is connected to an output terminal 42b. As the igniter transformer 50, for example, a transformer having a winding ratio of the primary winding to the secondary winding of about 4.5:77 is used, and the capacitor 74 having a capacity of about 470 pF is used.

In the intermittent operation control means 62, an electrolytic capacitor 79 having a large capacity via a diode 75 electrically arranged in a forward polarity and resistances 76, 77, 78 electrically arranged in series between the input terminal 41a and 41b. Moreover, the electrolytic capacitor 79 is connected in parallel with a series circuit of a bidirectional two-terminal thyristor 80 and resistance 81, and connected in parallel with a resistance 83 via a Zener diode 82 electrically arranged in a reverse polarity. A relation between a breakover voltage V80 of the two-terminal thyristor 80 and a Zener voltage V82 of the Zener diode 82 is set to V80 > V82. Furthermore, the capacitor 71 of the high voltage pulse generation means 61 is connected in parallel with a MOS type field effect transistor (FET) 84, and a gate of the FET 84 is connected to a connection point between the Zener diode 82 and the resistance 83.

In the second starting unit 5 constituted in this manner, on receiving a supply of a low-frequency power from the lighting device 2, the capacitor 65 is quickly charged via the resistance 63 and diode 64. The electrolytic capacitor 79 is charged via the diode 75 and the resistances 76, 77, 78. The FET 84 is in an off-state, the capacitor 71 is charged via the resistances 68, 69, 70.

As shown in FIG. 8A, the electrolytic capacitor 79 is slowly charged by a large time constant. On the other hand, the capacitor 71 is charged at a comparatively high speed. Moreover, when the charged voltage of the capacitor 71 reaches the breakover voltage of the two-terminal thyristor 73, the two-terminal thyristor 73 conducts, and accordingly the three-terminal thyristor 67 conducts.

When the three-terminal thyristor 67 conducts, a charged electric charge of the capacitor 65 is discharged via the primary winding of the igniter transformer 50, the diode 66, and the three-terminal thyristor 67, and a high voltage pulse is generated in the secondary winding of the igniter transformer 50. Moreover, the high voltage pulse is applied to the high intensity discharge lamp 3. Furthermore, the capacitors 65 and 71 are charged again. When the charged voltage of the capacitor 71 reaches the breakover voltage of the two-terminal thyristor 73, the three-terminal thyristor 67 conducts again, and a high voltage pulse is generated in the secondary winding of the igniter transformer 50.

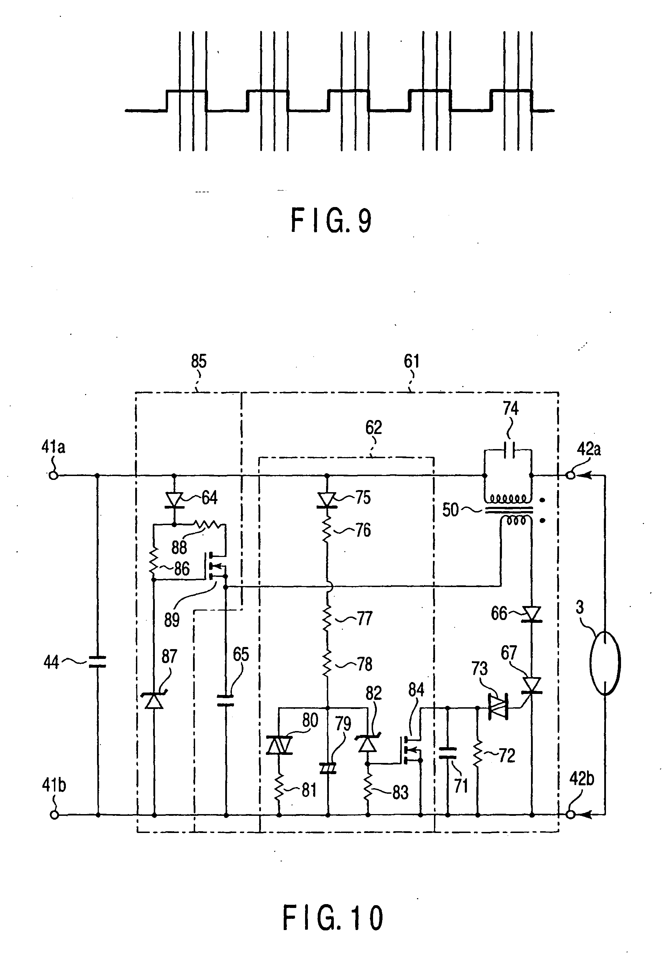

Subsequently, this operation is repeated. When the power is turned on, first the high voltage pulse is repeatedly and continuously applied to the high intensity discharge lamp 3 from the second starting unit 5 for a comparatively long time as shown in FIG. 8B. It is to be noted that a part shown by slanted lines in the figure shows a low-frequency output. An example of a voltage relation between the low-frequency output and the high voltage pulse will be described. For example, when the low-frequency output is about 220 V to 300 V, the high voltage pulse is about 3.5 KV to 5 KV. When the generation of the high voltage pulse at this time is viewed from the relation with the low-frequency output, as shown in FIG. 9, the high voltage pulses are generated at such a ratio that three high voltage pulses are generated in a positive half-wave period of the low-frequency output constituted of a rectangular wave of, for example, 100 Hz.

While the high voltage pulse is repeatedly and continuously applied for a comparatively long time, the high intensity discharge lamp 3 may start lighting. However, a steam present in a tube is high in a state in which the high intensity discharge lamp 3 is not completely cooled immediately after the lamp turns off. Therefore, in this case, even when the high voltage pulse repeatedly continues to be applied for a comparatively long time, the lighting does not start in some case.

In this case, the charged voltage of the electrolytic capacitor 79 reaches the Zener voltage V82 of the Zener diode 82 before long. Accordingly, the Zener diode 82 conducts, and the FET 84 turns on. When the FET 84 urns on, the capacitor 71 is short-circuited, and therefore conduction control of the three-terminal thyristor 67 is stopped. Accordingly, thereafter the generation of the high voltage pulse is stopped. As shown in FIG. 8A, even after the Zener voltage is reached, the electrolytic capacitor 79 continues the charging, and the charged voltage is boosted. Moreover, the charged voltage reaches the breakover voltage V80 of the two-terminal thyristor 80 before long.

When the charged voltage of the electrolytic capacitor 79 reaches the breakover voltage V80 of the two-terminal thyristor 80, the two-terminal thyristor 80 conducts. Therefore, the electrolytic capacitor 79 rapidly discharges electricity via the two-terminal thyristor 80 and resistance 81, and the charged voltage drops sufficiently below the Zener voltage. Accordingly, the Zener diode 82 does not conduct, and the FET 84 turns off. The capacitor 71 starts the charging operation again in this manner.

When the capacitor 71 starts the charging operation, the three-terminal thyristor 67 conducts by the conduction of the two-terminal thyristor 73, and the high voltage pulse is generated from the secondary winding of the igniter transformer 50. The high voltage pulse is applied to the high intensity discharge lamp 3. A generation period of the high voltage pulse is a period until the charged voltage of the electrolytic capacitor 79 reaches the Zener voltage of the Zener diode 82, and this period is shorter than a first period. When the high intensity discharge lamp 3 is not lit even by the application of the high voltage pulse, the generation of the high voltage pulse is stopped again.

When the high intensity discharge lamp 3 does not easily light in this manner, the high voltage pulse is not continuously generated from the second starting unit 5. As shown in FIG. 8B, after the charged voltage of the electrolytic capacitor 79 reaches the Zener voltage V82 of the Zener diode 82, and the charged voltage reaches the breakover voltage V80 of the two-terminal thyristor 80, the generation of the high voltage pulse is stopped until the charged voltage of the capacitor 71 reaches the breakover voltage of the two-terminal thyristor 73. Therefore, in this period, any noise by the high voltage pulse is not generated. Therefore, the noises by the high voltage pulse can be entirely reduced. Since the high voltage pulse is not continuously generated, damages on the electrode of the high intensity discharge lamp 3 can also be reduced.

When the high intensity discharge lamp 3 starts lighting, the voltage between the opposite ends of the discharge lamp 3 drops. Therefore, in this case, the charged voltage of the capacitor 71 does not reach the breakover voltage of the two-terminal thyristor 73, and the generation of the high voltage pulse is completely stopped.

It is to be noted that, needless to say, functions/effects similar to those of the above-described embodiment are produced even in the embodiment. Even in the present embodiment, in the same manner as in the above-described embodiment, an operation switch may be electrically arranged in such a manner as to forcibly stop a pulse generation operation.

A modification of the second starting unit 5 will now be described. It is to be noted that a basic constitution of the present embodiment is the same as previously. The constitution of the lighting device 2 is the same as that of Fig 2, and the whole constitution is the same as that of FIG. 3.

In a second starting unit 5, as shown in FIG. 10, a limit circuit 85 which limits a charged voltage of a capacitor 65 is electrically arranged. That is, in the limit circuit 85, a series circuit of a diode 64, a resistance 86 and a Zener diode 87 is electrically arranged between input terminals 41a, 41b. Moreover, a series circuit of the resistance 86 and Zener diode 87 is connected in parallel with a series circuit of a resistance 88, a MOS type FET 89, and the capacitor 65, and a gate of the FET 89 is connected to a connection point between the resistance 86 and the Zener diode 87.

In the limit circuit 85, a constant voltage is applied to a gate of the FET 89 by the Zener diode 87. The FET 89 performs an on-operation in a state in which a source potential is lower than a gate potential by about 3 V. Therefore, for example, when a Zener voltage of the Zener diode 87 is set to 180 V, the FET 89 performs the on-operation until the charged voltage of the capacitor 65 reaches 177 V. When the charged voltage of the capacitor 65 reaches 177 V, an on-state is switched to an off-state. Accordingly, the charged voltage of the capacitor 65 is held to be constant substantially at 177 V. This is kept to be constant regardless of the voltage applied between the input terminals 41a, 41b.

Additionally, in the lighting device 2 connected to the second starting unit 5, there is a fluctuation in an output voltage, and the fluctuation is, for example, about 220 V to 300 V. With regard to the fluctuation, when the limit circuit 85 is not electrically arranged, the fluctuation is generated in the charged voltage of the capacitor 65. As a result, a fluctuation is generated in a voltage value of the generated high voltage pulse. When the voltage value of the applied high voltage pulse is limited in an illuminating appliance and the like for use, this fluctuation raises a problem.

In this respect, when the limit circuit 85 is electrically arranged, and even when there is a fluctuation in the voltage value of a low-frequency output input into the input terminals 41a, 41b from the lighting device 2, the voltage value charged into the capacitor 65 can be controlled to be constant. Therefore, the voltage value of the high voltage pulse generated in the secondary winding of the igniter transformer 50 can be controlled to be substantially constant, and the voltage value of the applied high voltage pulse can be easily suppressed at a limited value.

It is to be noted that, needless to say, functions/effects similar to those described above are produced .

Even in the present arrangement, in the same manner as described above, an operation switch may be electrically arranged in such a manner as to forcibly stop a pulse generation operation.

A modification of the second starting unit 5 will now be described. It is to be noted that a basic constitution is the same as that of Fig 7. The constitution of the lighting device 2 is the same as that of Fig 2, and the whole constitution is the same as that of FIG. 3.

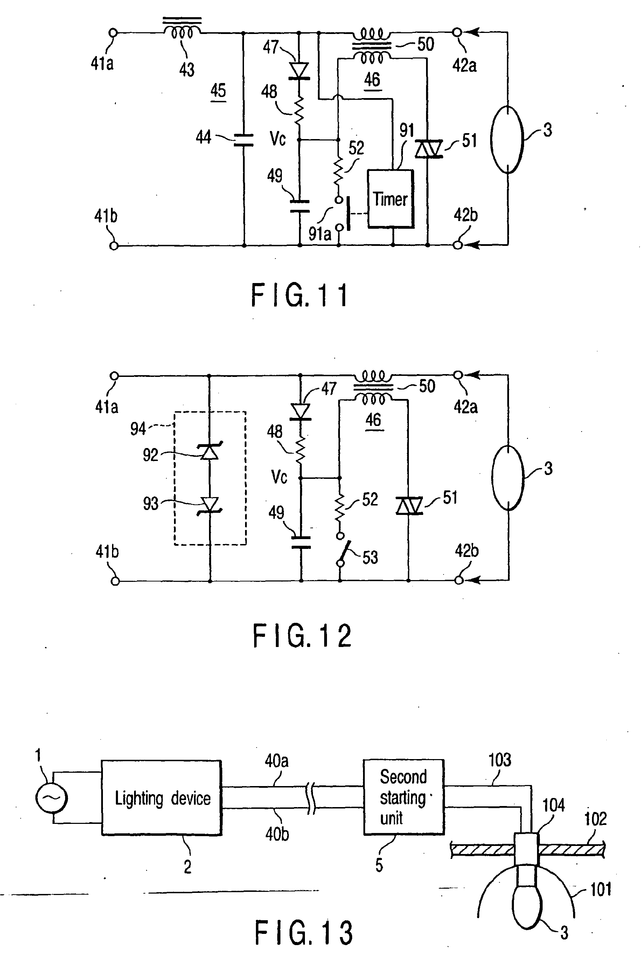

In a second starting unit 5, as shown in FIG. 11, a timer circuit 91 is used instead of the operation switch 53 used in the lighting device 2 of the above-described Fig 2. That is, the timer circuit 91 is connected in parallel with the capacitor 44. Moreover, a normally open contact 91a driven by the timer circuit 91 is connected in parallel with a capacitor 49 via a resistance 52.

The timer circuit 91 is constituted, for example, of an IC, starts its operation when a power supply is turned on, and performs an operation to close the normally open contact 91a after elapse of a certain time, for example, 10 to 20 minutes. When the power supply is stopped, the circuit is reset.

In this constitution, when the high intensity discharge lamp 3 cannot light in the last stage of its life or because of failure, a high voltage pulse from the second starting unit 5 to a high intensity discharge lamp 3 can be stopped after the elapse of the certain time. This can prevent noises from being generated by the high voltage pulse or prevent the high voltage pulse from being generated uselessly. Moreover, when the power supply is stopped, the timer circuit 91 is reset, and the normally open contact 91a is opened. When the power supply is turned on next, the second starting unit 5 operates as usual.

It is to be noted that , when the timer circuit 91 closes the normally open setting 91a after the elapse of the certain time, an output is separately taken out of the timer circuit 91, and notification means such as a light emitting diode may be operated by the output to notify the trouble. In this case, a high intensity discharge lamp in the last stage of the life or a high intensity discharge lamp which has broken down can be easily known, and can be instantly replaced. It is to be noted that, needless to say, functions/effects similar to those described above are produced.

Another modification of the second starting unit 5 will be described. It is to be noted that a basic constitution is the same as that of Fig. 7. The constitution of the lighting device 2 is the same as that of Fig. 2, and the whole constitution is the same as that of FIG. 3.

In a second starting unit 5, as shown in FIG. 12, high voltage pulse reduction means 94 constituted by connecting a pair of Zener diodes 92, 93 in series to each other and into mutually reverse polarities is used instead of the high voltage pulse reduction means 45 constituted of the inductor 43 and capacitor 44 used in the second starting unit 5 in the above-described Fig. 2.

When a high voltage pulse is input between input terminals 41a, 41b, the high voltage pulse reduction means 94 suppresses and reduces the high voltage pulse into a Zener voltage. Even when the high voltage pulse reduction means 94 to suppress and reduce the high voltage pulse into the Zener voltage is used, the high voltage pulse from a lighting device 2 can be reduced, and adverse affects such as damages of circuit elements by the high voltage pulse can be removed. It is to be noted that, needless to say, functions/effects similar to those described above are produced.

It is to be noted that the high voltage pulse reduction means which suppresses and reduces the high voltage pulse is not limited to a circuit constituted of the Zener diode, and elements such as a varistor and a discharge gap are usable.

An illuminating apparatus will now be described.

As shown in FIG. 13, a high intensity discharge lamp 3 is supported by an illuminating appliance 101, and the illuminating appliance 101 is fixed, for example, to a ceiling 102 indoors. Moreover, a second starting unit 5 is electrically arranged in the vicinity of the illuminating appliance 101, and is connected to a lamp socket 104 by a wiring 103. It is to be noted that the second starting unit 5 may be directly connected to the lamp socket 104. The second starting unit 5 may be integrally incorporated into the lamp socket 104.

A lighting device 2 is installed in a specific place indoors, and connected to the second starting unit 5 via long wirings 40a, 40b.

In this case, even when the illuminating appliance 101 is electrically arranged in a position distant from the lighting device 2, the high intensity discharge lamp 3 can be securely started/lit using the second starting unit 5.

Next, another arrangement will be described with reference to FIG. 13 and FIGS. 15 to 16B.

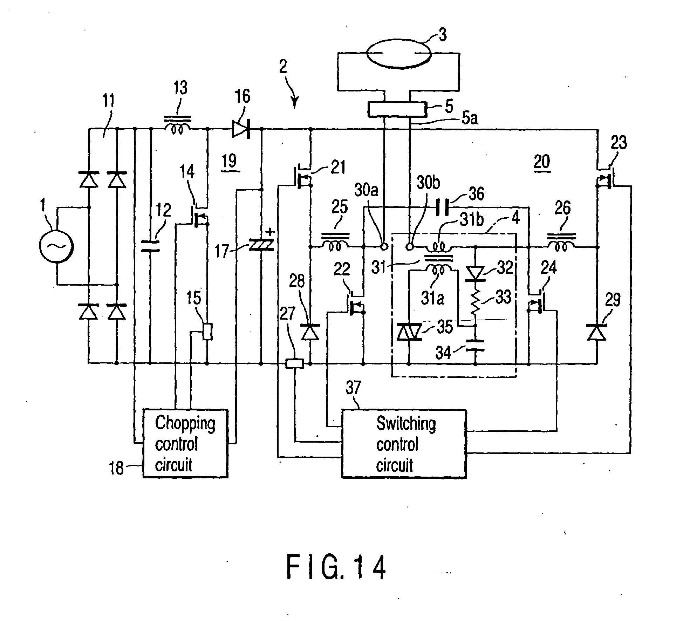

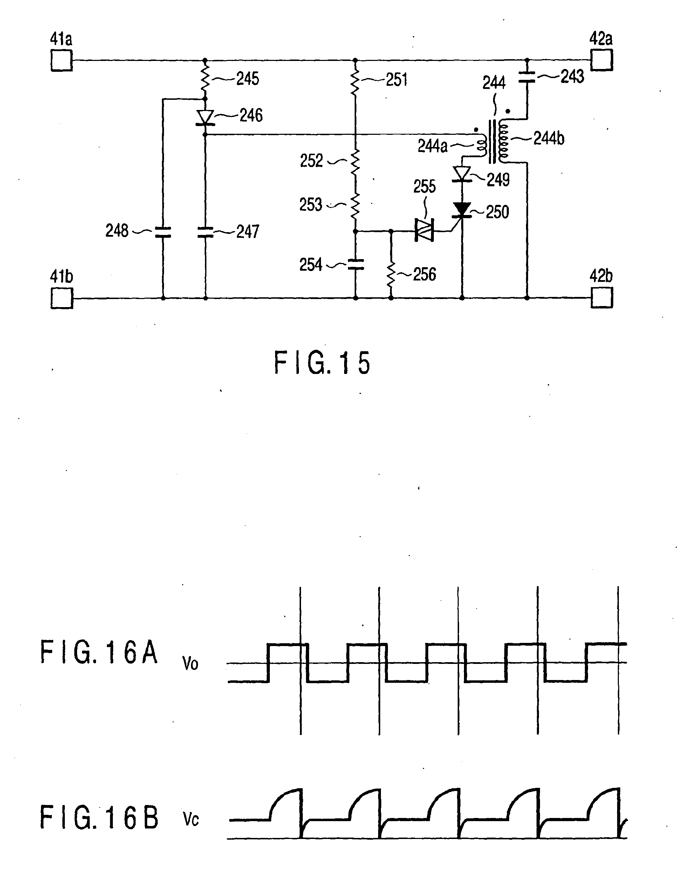

FIG. 3 is a block diagram showing a whole constitution of a discharge lamp lighting device, FIG. 14 is a circuit diagram similarly showing the lighting device, FIG. 15 is a circuit diagram showing a second starting unit, and FIGS. 16A and 16B are voltage waveform diagrams of a main part similarly showing a function.

As shown in FIG. 14, the lighting device 2 is of such a computerized type that power is supplied from the commercial alternating-current power source 1 to operate the device. First, power from the commercial alternating-current power source 1 is input via a transmission-wave rectification circuit 11 constituted of a diode bridge. A capacitor 12 for high-frequency bypass is connected between output ends of the transmission-wave rectification circuit 11. A series circuit of a first inductor 13, a MOS-type first field effect transistor (FET) 14, and a first current detection element 15 is connected between the output ends of the transmission-wave rectification circuit 11.

The series circuit of the first FET 14 and first current detection element 15 is connected to a smoothing capacitor 17 constituted of an electrolytic capacitor via a diode 16 in a forward direction. With respect to the first FET 14, a chopping control circuit 18 which controls a on/off-state is electrically arranged. The chopping control circuit 18 inputs an input voltage from the transmission-wave rectification circuit 11, an output voltage generated between opposite ends of the smoothing capacitor 17, and an output voltage from the first current detection element 15, and controls turning-off and/or turning-off timing of the FET 14.

The first inductor 13, first FET 14, diode 16, smoothing capacitor 17, and chopping control circuit 18 constitute a booster chopper circuit 19. In the booster chopper circuit 19 obtains a required direct-current voltage by a booster function, and operates in such a manner as to reduce high harmonic components of an input current from the commercial alternating-current power source 1 by an active filter function.

A polarity reversing circuit and regulator circuit 20 is connected between the opposite ends of the smoothing capacitor 17. The polarity reversing circuit and regulator circuit 20 includes MOS-type second, third, fourth, fifth FETs 21, 22, 23, 24, and second, third inductors 25, 26. Moreover, the second FET 21, second inductor 25, and third FET 22 are connected in series, a drain terminal of the second FET 21 is connected to a positive electrode terminal side of the smoothing capacitor 17, and a source terminal of the third FET 22 is connected to a negative electrode terminal side of the smoothing capacitor 17 via a second current detection element 27.

Moreover, the fourth FET 23, third inductor 26, and fifth FET 24 are connected in series, the drain terminal of the fourth FET 23 is connected to the positive electrode terminal side of the smoothing capacitor 17, and the source terminal of the fifth FET 24 is connected to the negative electrode terminal side of the smoothing capacitor 17 via the second current detection element 27.

A diode 28 is set into a polarity reverse to that of the third FET 22, and connected in parallel with a series circuit of the second inductor 25 and third FET 22, and a diode 29 is set into a polarity reverse to that of the fifth FET 24, and connected in parallel with a series circuit of the third inductor 26 and fifth FET 24.

A connection point between the second inductor 25 and the third FET 22 is connected to one terminal 30a connected to the high intensity discharge lamp 3, and a connection point between the third inductor 26 and the fifth FET 24 is connected to the other terminal 30b connected to the high intensity discharge lamp 3 via an output winding 31b of a transformer 31 constituting the first starting unit 4, connected in series.

The first starting unit 4 further includes a starting circuit constituted of: a series circuit of a diode connected in parallel with the fifth FET 24, a resistance 33 and a capacitor 34, and a series circuit of an input winding 31a of the transformer 31 connected in parallel with the capacitor 34 and a bidirectional two-terminal thyristor 35.

Moreover, a capacitor 36 for bypassing a high-frequency component of a voltage applied to the high intensity discharge lamp 3 is connected between a connection point between the second inductor 25 and the third FET 22, and that between the third inductor 26 and the fifth FET 24.

The polarity reversing circuit and regulator circuit 20 further includes a switching control circuit 37, takes in an output voltage from the second current detection element 27, and switches/controls the second, third, fourth, and fifth FETs 21, 22, 23, 24 in such a manner that a flowing current becomes constant.

In this case, the second, fourth FETs 21, 23 are switched/controlled at a high frequency of several tens of KHz, the third, fifth FETs 22, 24 are switched/controlled, for example, at a low frequency of 100 Hz, and an off-period in which high-frequency switching is not performed is electrically arranged in synchronization with the third, fifth FETs 22, 24 in the second, fourth FETs 21, 23. That is, the second FET 21 performs a high-frequency switching operation in synchronization with a period in which the fifth FET 24 is on. In a period in which the fifth FET 24 is off, the second FET 21 also stops the high-frequency switching operation and continues its on-state. The fourth FET 23 performs the high-frequency switching operation in synchronization with a period in which the third FET 22 is on. In a period in which the third FET 22 is off, the fourth FET 23 also stops the high-frequency switching operation and continues its off-state. The lighting device 2 supplies a high-frequency power having an envelope curve of a rectangular wave of 100 Hz to the high intensity discharge lamp 3 in this manner. It is to be noted that the low-frequency envelope curve is not necessarily limited to the rectangular wave, and may be a sinusoidal wave. The low frequency is not limited to 100 Hz. In addition to a power having a low-frequency envelope curve, a high-frequency alternating-current power of several tens of kHz may be continuously supplied.

The second starting unit 5 receives a supply of a power having the low-frequency envelope curve from the lighting device 2 to operate. As shown in FIG. 15, a series circuit of an impedance device 243 indicating a low impedance value with respect to a pulsed voltage, and an output winding 244b of a transformer 244 is connected between the input terminals 41a, 41b. Since the high intensity discharge lamp 3 is connected between the output terminals 42a, 42b, the output winding 244b of the transformer 244 is connected in parallel with the high intensity discharge lamp 3. The impedance device 243 cuts, for example, a low-frequency voltage, and prevents the flowing of a low-frequency current through the output winding 244b. Moreover, additionally or separately, a waveform of a high voltage generated in the output winding 244b is thickened (enlarged) as a constant for resonance with the output winding 244b. The impedance device has a function of shaping the waveform in this manner.

Moreover, a series circuit of a resistance 245, a diode 246, and a capacitor 247 is connected between the input terminals 41a, 41b. The series circuit of the diode 246 and the capacitor 247 is connected in parallel with a capacitor 248 for absorbing a starting high-voltage from the first starting unit 4. A midpoint between the diode 246 and the capacitor 247 is connected to one-end side of an input winding 244a of the transformer 244. Moreover, the other end side of the input winding 244a is connected to a non-diode 246 side of the capacitor 247 via a diode 249 and a three-terminal switching element 250.

Furthermore, a time constant circuit constituted of a series circuit of resistances 251, 252, 253 and a capacitor 254 is connected between the input terminals 41a, 41b. A midpoint of a series circuit of the resistance 253 and the capacitor 254 is connected to a control pole of the three-terminal switching element 250 via a trigger element 255. A resistance 256 connected in parallel with the capacitor 254 is used for discharging power from the capacitor 254. By this constitution, when the trigger element 255 turns on by opposite end voltages of the capacitor 254 of the time constant circuit, the three-terminal switching element 250 turns on. Therefore, accumulated charges of the capacitor 247 are rapidly discharged through the input winding 244a, diode 249, and three-terminal switching element 250. Accordingly, high voltages are generated in the opposite ends of the output winding 244b of the transformer 244.

It is to be noted that the impedance device 243 does not have to be electrically arranged as the case may be. When the impedance device 243 is electrically arranged, the value is selected in consideration of a level of the high voltage to be absorbed, frequency components and the like. For example, when the capacitor is used, 0.033 µF or more is preferable, and here 0.1 µF is used.

Next, a function of the present embodiment will be described. In the lighting device 2, by the on/off operation of the first FET 14, direct-current voltages boosted by a peak value of a commercial power voltage are generated in the opposite ends of the smoothing capacitor 17. In the polarity reversing circuit and regulator circuit 20, the third FET 22 and the fifth FET 24 are controlled to alternately turn on/off in a low-frequency cycle. The second FET 21 performs a high-frequency switching operation only in a period in which the fifth FET 24 is on, and the fourth FET 23 performs a high-frequency switching operation only in a period in which the third FET 22 is on.

Moreover, before the high intensity discharge lamp 3 lights, when the fourth FET 23 turns on, a charged current flows from the positive electrode terminal of the smoothing capacitor 17 to the fourth FET 23→the third inductor 26→the diode 32→the resistance 33→the capacitor 34→the second current detection element 27→the negative electrode terminal of the smoothing capacitor 17, and the capacitor 34 is charged. This charging is repeated every on-operation of the fourth FET 23 until the charged voltage of the capacitor 34 reaches a breakover voltage of the bidirectional two-terminal thyristor 35. Then, the bidirectional two-terminal thyristor 35 conducts. When the bidirectional two-terminal thyristor 35 conducts, a discharged current momentarily flows through the input winding 31a of the transformer 31 from the capacitor 34, and a high voltage pulse of several kVs is generated in the output winding 31b of the transformer 31 and applied to the high intensity discharge lamp 3.

When the lighting device 2 and high intensity discharge lamp 3 are installed in a place where they are connected to each other via a short wiring, the wiring distance to the high intensity discharge lamp 3 is short, and therefore the pulsed high voltage is applied to the high intensity discharge lamp 3 substantially without being attenuated. When this is repeated, the high intensity discharge lamp 3 starts lighting before long. When the wiring distance to the high intensity discharge lamp 3 is short, the starting/lighting can be securely performed by the pulsed voltage from the first starting unit 4. Therefore, the second starting unit 5 can be omitted as data area.

In this case, after the high intensity discharge lamp 3 lights, the lamp voltage of the high intensity discharge lamp 3 drops, for example, to about 100 to 130 V from about 260 V, the charged voltage of the capacitor 34 does not reach the breakover voltage of the bidirectional two-terminal thyristor 35, and the output of the high voltage pulse from the first starting unit 4 is stopped. That is, after the high intensity discharge lamp 3 lights, the generation of the high voltage pulse can be securely stopped.

Moreover, in a period in which the fifth FET 24 is on, when the second FET 21 turns on, a current flows from the positive electrode terminal of the smoothing capacitor 17 to the second FET 21→the inductor 25→the high intensity discharge lamp 3→the secondary winding of the igniter transformer 31→the fifth FET 24→the second current detection element 27→the negative electrode terminal of the smoothing capacitor 17. Moreover, when the second FET 21 turns off, a current flows through the inductor 25→the high intensity discharge lamp 3→the secondary winding of the igniter transformer 31→the fifth FET 24→the diode 28→the inductor 25, and this is repeated every turning-on/off of the second FET 21.

Furthermore, in a period in which the third FET 22 is on, when the fourth FET 23 turns on, a current flows from the positive electrode terminal of the smoothing capacitor 17 to the fourth FET 23→the inductor 26→the secondary winding of the igniter transformer 31→the high intensity discharge lamp 3→the third FET 22→the second current detection element 27→the negative electrode terminal of the smoothing capacitor 17. Moreover, when the fourth FET 23 turns off, the current flows to the inductor 26→the secondary winding of the igniter transformer 31→the high intensity discharge lamp 3→the third FET 22→the diode 29→the inductor 26, and this is repeated every turning on/off of the fourth FET 23.

In this manner, the high intensity discharge lamp 3 maintains the lighting at a low frequency of about 100 Hz. A voltage waveform supplied to the high intensity discharge lamp 3 from the polarity reversing circuit and regulator circuit 20 at the lighting time forms a low-frequency rectangular wave. In actual, the high-frequency component is laid on the rectangular wave, but is smoothed by the capacitor 36.

Moreover, when the lighting device 2 and high intensity discharge lamp 3 are installed in a place where they are connected to each other via a long wiring, the high voltage pulse generated from the first starting unit 4 of the lighting device 2 is attenuated halfway, and therefore the high intensity discharge lamp 3 cannot be smoothly started/lit. In this case, as shown in FIG. 3, the terminals 30a, 30b of the lighting device 2 are connected to one end of each of the long wirings 40a, 40b, the other end of each of the wirings 40a, 40b is connected to the input terminals 41a, 41b of the second starting unit 5, and the output terminals 42a, 42b of the second starting unit 5 are connected to the high intensity discharge lamp 3 via short wirings.

In this constitution, a power having a low-frequency envelope curve is supplied from the lighting device 2 to operate the second starting unit 5. Moreover, a high voltage pulse generated from the first starting unit 4 of the lighting device 2 is absorbed by the impedance device 243 of the second starting unit 5. Therefore, in the second starting unit 5, adverse affects such as damages of elements by the high voltage pulse from the lighting device 2 can be removed. When the input terminal 41a is a positive electrode, the capacitor 247 is charged via the resistance 245, and diode 246 by the rectangular-wave voltage output from the lighting device 2. Furthermore, the capacitor 254 is also charged via the resistances 251, 252, and 253. Moreover, when the charged voltage of the capacitor 254 reaches the breakover voltage of the trigger element 255, the trigger element 255 conducts.

When the trigger element 255 conducts, the discharged current from the capacitor 247 momentarily flows through the input winding 244a of the transformer 244, and a high voltage pulse of several kilovolts is generated in the output winding 244b of the transformer 244, and applied to the high intensity discharge lamp 3 through the impedance device. The starting high-voltage generated by the second starting unit 5 is applied to the output winding 31b of the transformer 31 of the first starting unit 4, but the high-voltage does not flow to the power supply 1 side by the effect of capacitor C36. Furthermore, the adverse affects of the voltage applied to the other electric components of the lighting device 2 are also reduced.

Moreover, when the high voltage pulse is set in such a manner as to be generated once every time the input terminal 41a becomes the positive electrode, voltage waveforms are output from the output terminals 42a, 42b of the second starting unit 5 as shown in FIG. 16A, and the high intensity discharge lamp 3 is securely started/lit before long. A charged voltage VC of the capacitor 247 in this operation changes as shown in FIG. 16B. That is, charging/discharging is performed only while the input terminal 41a is the positive electrode. While the input terminal 41b is the positive electrode, the charging is stopped.

Moreover, when the high intensity discharge lamp 3 starts lighting, a lamp voltage drops, therefore the charged voltage of the capacitor 254 does not reach the breakover voltage of the trigger element 255, and the output of the pulsed voltage from the second starting unit 5 is stopped. That is, after lighting the high intensity discharge lamp 3, the generation of the pulsed voltage can be securely stopped. Moreover, after the lighting, the lighting is maintained by the low-frequency power from the lighting device 2.

Whether the wiring distance between the lighting device 2 and the high intensity discharge lamp 3 is short or long in this manner, the same lighting device 2 is used. That is, the lighting device can be used in common. Therefore, the lighting device does not have to be changed while checking situations of the wiring, and operability can be enhanced. Moreover, when the wiring distance is long, the second starting unit 5 may be brought close to the high intensity discharge lamp 3 and connected between the lighting device 2 and the high intensity discharge lamp 3. When the wiring distance is short, the high intensity discharge lamp 3 may be directly connected to the lighting device 2. The number of components to be attached can be reduced as compared with the long wiring distance, and an attaching operation is facilitated.

It is to be noted that here, as the lighting device 2, a type of the device which continues generating the high voltage pulse at a constant interval until the high intensity discharge lamp 3 starts lighting is used, but the present invention is not limited to this type. Even if a type of the device for intermittently generating the high voltage pulse with a certain rest period until the high intensity discharge lamp 3 starts lighting is used, there is not any problem. Even when the high voltage pulse is generated for a certain period, the operation may be stopped in a case where the high intensity discharge lamp does not start.

Next, an illuminating apparatus has the same constitution of FIG 13 and its effect is same.

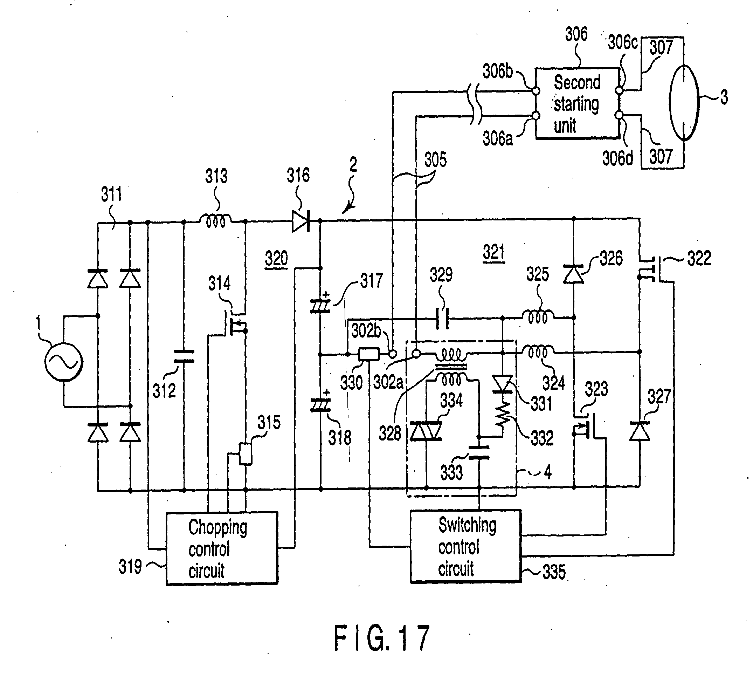

As shown in FIG. 17, a lighting device 2 is connected to a commercial alternating power source 1. The lighting device 2 contains a first starting unit 4 which produces a high voltage pulse to start the high intensity discharge lamp 3. Output terminals 302a, 302b of the lighting device 2 are connected to input terminals 306a, 306b of a second starting unit 306 via long-distance wirings 305. Moreover, the high intensity discharge lamp 3 is connected to output terminals 306c, 306d of the second starting unit 306 via short-distance wirings 307.

The lighting device 2 is connected to an input terminal of a transmission-wave rectification circuit 311 constituted of a diode bridge, an output terminal of the transmission-wave rectification circuit 311 is connected in parallel with a capacitor 312, and a series circuit of an MOS-type first field-effect transistor (FET) 314 and a first current detection element 315 is connected in parallel via a first inductor 313. Moreover, the series circuit of the first FET 314 and first current detection element 315 is connected in parallel with a series circuit of a pair of smoothing capacitors 317, 318 constituted of electrolytic capacitors via a diode 316 in a forward direction.

The first inductor 313, first FET 314, diode 316, and smoothing capacitors 317, 318 constitute a booster chopper circuit 320. In the booster chopper circuit 320, a chopping control circuit 319 is electrically arranged, and an input voltage from the transmission-wave rectification circuit 311, an output voltage produced between opposite ends of the series circuit of the smoothing capacitors 317, 318, and an output voltage from the first current detection element 315 are input into the chopping control circuit 319. The FET 314 is controlled to turn on/off, and a turn-off timing is controlled.

A polarity reversing circuit and regulator circuit 321 is connected to an output terminal of the booster chopper circuit 320, that is, between the opposite ends of the series circuit of the smoothing capacitors 317, 318. The polarity reversing circuit and regulator circuit 321 includes MOS-type second, third FETs 322, 323, second, third inductors 324, 325, and the first starting unit 4.

That is, a positive electrode terminal of the smoothing capacitor 317 is connected to a drain terminal of the second FET 322, and a cathode of a diode 326. A negative electrode terminal of the smoothing capacitor 318 is connected to a source terminal of the third FET 323, and an anode of a diode 327.

A source terminal of the second FET 322 is connected to a cathode of the diode 327, and a connection point is connected to the output terminal 302a via the second inductor 324 and to the secondary winding of an igniter transformer 328 constituting the first starting unit 4. A drain terminal of the third FET 323 is connected to an anode of the diode 326, and its connection point is connected to a connection point between the second inductor 324 and the secondary winding of the igniter transformer 328 via the third inductor 325, and further connected to a connection point between the smoothing capacitors 317 and 318 via a capacitor 329. A connection point between the smoothing capacitors 317, 318 is connected to the output terminal 302b via a second current detection element 330.

The first starting unit 4 is constituted by a high voltage pulse generation circuit in which a series circuit of a diode 331, a resistance 332, and a capacitor 333 is connected between a connection point between the second inductor 324 and the secondary winding of the igniter transformer 328, and the negative electrode terminal of the smoothing capacitor 318, and the capacitor 333 is connected in parallel with a series circuit of the primary winding of the igniter transformer 328 and a bidirectional two-terminal thyristor 334.

The polarity reversing circuit and regulator circuit 321 further includes a switching control circuit 335, takes in an output voltage from the second current detection element 330, and switches/controls the second, third FETs 322, 323 in such a manner that a flowing current becomes constant. Moreover, in this case, the switching control is performed at a high frequency of several tens of kHz. When the second FET 322 performs a switching control, the third FET 323 is maintained in an off-state. Conversely, when the third FET 323 performs a switching control, the second FET 322 maintains its off-state, and the switching is performed at a low frequency of, for example, 100 Hz.

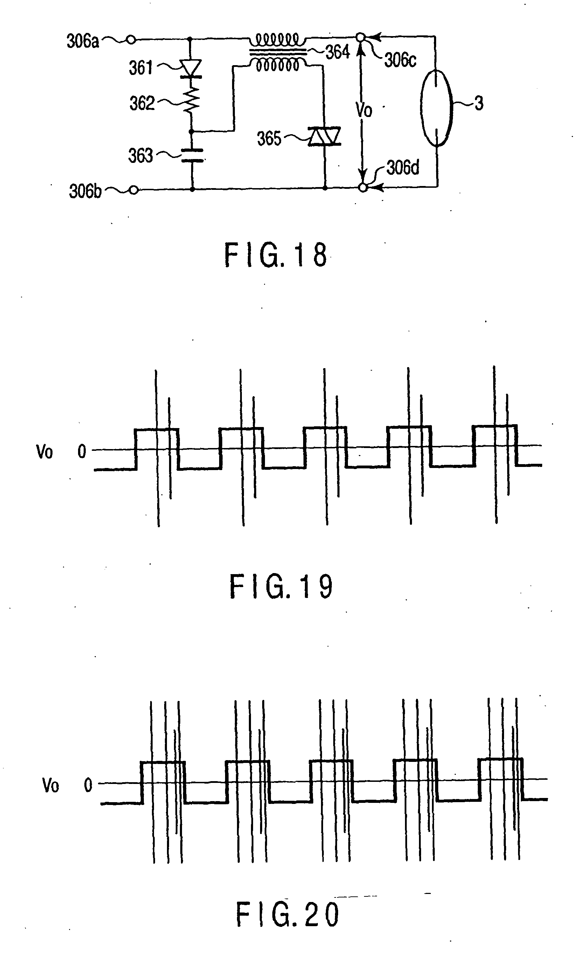

In the second starting unit 306, as shown in FIG. 18, a series circuit of a diode 361, a resistance 362, and a capacitor 363 is connected between the input terminals 306a, 306b, and the capacitor 363 is connected in parallel with a series circuit of the primary winding of an igniter transformer 364 and a bidirectional two-terminal thyristor 365. Moreover, the input terminal 306a is connected to the output terminal 306c via the secondary winding of the igniter transformer 364, and the input terminal 306b is directly connected to the output terminal 306d.

In the constitution, in the lighting device 2, a power voltage is boosted by the on/off operation of the first FET 314, the boosted direct-current voltage is charged into the smoothing capacitors 317, 318, and the direct-current voltage is a power supply of the polarity reversing circuit and regulator circuit 321. An input power factor is enhanced by the booster chopper operation.

In the polarity reversing circuit and regulator circuit 321, the second FET 322 and third FET 323 are alternately high-frequency switched/controlled for each certain period, and a rectangular-wave output for alternately reversing the polarity is supplied to the high intensity discharge lamp 3 from the output terminals 302a, 302b via the second starting unit 306.

Before the high intensity discharge lamp 3 lights, in a period in which the second FET 322 performs high-frequency switching, when the second FET 322 turns on, a charged current flows from the positive electrode terminal of the smoothing capacitor 317 to the second FET 322→the second inductor 324→the diode 331→the resistance 332→the capacitor 333→the negative electrode terminal of the smoothing capacitor 318, and the capacitor 333 is charged. This charging is repeated every on-operation of the second FET 322 until the charged voltage of the capacitor 333 reaches a breakover voltage of the bidirectional two-terminal thyristor 334. Then, the bidirectional two-terminal thyristor 334 conducts. When the bidirectional two-terminal thyristor 334 conducts, a discharged current momentarily flows through the primary winding of the igniter transformer 328 from the capacitor 333, and a high voltage pulse of several KVs is generated in the secondary winding of the igniter transformer 328 and applied to the high intensity discharge lamp 3 via the wirings 305 and second starting unit 306.

Moreover, in the second starting unit 306, when one polarity from the lighting device 2, that is, a rectangular-wave voltage constituting a positive electrode on an input terminal 306a side is input, the capacitor 363 is charged via the diode 361 and resistance 362. When the charged voltage of the capacitor 363 reaches the breakover voltage of the bidirectional two-terminal thyristor 365, the bidirectional two-terminal thyristor 365 conducts. When the bidirectional two-terminal thyristor 365 conducts, the discharged current from the capacitor 363 momentarily flows through the primary winding of the igniter transformer 364, and a high voltage pulse of several kilovolts is generated in the secondary winding of the igniter transformer 364, and applied to the high intensity discharge lamp 3 via the wirings 307.

Here, a circuit constant of a circuit element of the resistance, capacitor, and bidirectional two-terminal thyristor is set in such a manner that a time from when the rectangular-wave voltage from the lighting device 2 is input in the second starting unit 306 until the charged voltage of the capacitor 363 reaches the breakover voltage of the bidirectional two-terminal thyristor 365 is shorter than a time from when the second FET 322 starts the high-frequency switching operation in the first starting unit 4 until the charged voltage of the capacitor 333 reaches the breakover voltage of the bidirectional two-terminal thyristor 334. Then, a voltage waveform applied to the high intensity discharge lamp 3 from the input terminals 306a, 306b of the second starting unit 306 is obtained as shown in FIG. 19.

That is, in a period in which the voltage is applied in such a manner that the input terminal 306a side in the rectangular-wave voltage from the lighting device 2 constitutes a positive electrode, first a high voltage pulse by the second starting unit 306 is generated, and thereafter a high voltage pulse by the first starting unit 4 is generated late. Moreover, the high voltage pulse by the second starting unit 306 is applied as such to the high intensity discharge lamp 3 without being attenuated. The high voltage pulse by the first starting unit 4 is attenuated by the wirings 305 halfway and applied to the high intensity discharge lamp 3.

In this manner, after applying the high voltage pulse from the second starting unit 306 to the high intensity discharge lamp 3 without any attenuation, the attenuated high voltage pulse from the first starting unit 4 is applied, and this is repeated every period for applying the voltage in such a manner that the input terminal 306a side in the rectangular-wave voltage is the positive electrode. Accordingly, the high intensity discharge lamp 3 is surely started/lit. That is, the high intensity discharge lamp 3 can be securely started/lit by the high voltage pulse from the first starting unit 4 and the high voltage pulse from the second starting unit 306. Additionally, since a generation timing of the high voltage pulse from the first starting unit 4 is shifted from that of the high voltage pulse from the second starting unit 306, two high voltage pulses are not superimposed, and an unnecessarily high voltage pulse can be prevented from being applied to the high intensity discharge lamp 3. Accordingly, there is not a possibility that the high intensity discharge lamp 3 is influenced in such a manner as to shorten its life. Furthermore, adjustment for switching the high voltage pulse generated in the lighting device 2, or adjustment for superposing two high voltage pulses is not required, or the need for troublesome adjustment can be obviated.

After the high intensity discharge lamp 3 lights, the lamp voltage of the high intensity discharge lamp 3 drops, for example, to 100 to 130 V from about 200 V. Therefore, the charged voltage of the capacitor 333 does not reach the breakover voltage of the bidirectional two-terminal thyristor 334, and the output of the high voltage pulse from the first starting unit 4 is stopped. Moreover, even in the second starting unit 306, the rectangular-wave voltage from the lighting device 2 drops. Therefore, the charged voltage of the capacitor 363 does not reach the breakover voltage of the bidirectional two-terminal thyristor 365, and the output of the high voltage pulse is stopped. In this manner, after the high intensity discharge lamp 3 lights, the high voltage pulses from both the first starting unit 4 and the second starting unit 306 can be securely stopped. Accordingly, the noise generation or the like can be minimized. Especially when the high intensity discharge lamp 3 lights at the high voltage pulse from the second starting unit 306, the generation of the high voltage pulse from the first starting unit 4 can be quickly stopped. Accordingly, the influences of the noises generated by the passage of the high voltage pulse from the first starting unit 4 through the wirings 305 onto the other apparatuses can be reduced.

Moreover, at the time of the lighting of the high intensity discharge lamp 3, in a period in which the second FET 322 performs the high-frequency switching, when the second FET 322 turns on, the current flows from the positive electrode terminal of the smoothing capacitor 317 to the second FET 322→the second inductor 324→the secondary winding of the igniter transformer 328→the high intensity discharge lamp 3→the secondary winding of the igniter transformer 364→the second current detection element 330→the negative electrode terminal of the smoothing capacitor 317. When the second FET 322 turns off, the current flows through the second inductor 324→the secondary winding of the igniter transformer 328→the high intensity discharge lamp 3→the secondary winding of the igniter transformer 364→the second current detection element 330→the smoothing capacitor 318→the diode 327→the second inductor 324.

Furthermore, in a period in which the third FET 323 performs the high-frequency switching, when the third FET 323 turns on, the current flows from the positive electrode terminal of the smoothing capacitor 318 through the second current detection element 330→the secondary winding of the igniter transformer 364→the high intensity discharge lamp 3→the secondary winding of the igniter transformer 328→the third inductor 325→the third FET 323→the negative electrode terminal of the smoothing capacitor 318. When the third FET 323 turns off, the current flows through the third inductor 325→the diode 326→the smoothing capacitor 317→the second current detection element 330→the secondary winding of the igniter transformer 364→the high intensity discharge lamp 3→the secondary winding of the igniter transformer 328→the third inductor 325.

Moreover, when on-duties of the second, third FETs 322, 323 are controlled, the outputs can be controlled.

It is to be noted that, in the period in which the voltage is applied in such a manner that the input terminal 306a side in the rectangular-wave voltage from the lighting device 2 is the positive electrode, the generation timing of the high voltage pulse from the second starting unit 306 is set to be before the generation timing of the high voltage pulse from the first starting unit 4, but the present invention is not necessarily limited to this. Conversely, the generation timing of the high voltage pulse from the first starting unit 4 may be brought before that of the high voltage pulse from the second starting unit 306.

Moreover, in the period in which the voltage is applied in such a manner that the input terminal 306a side in the rectangular-wave voltage from the lighting device 2 is the positive electrode, one high voltage pulse is generated from the second starting unit 306, but the present invention is not necessarily limited to this, and a generation period of the high voltage pulse in the second starting unit 306 is shortened. For example, as shown in FIG. 20, in the period in which the voltage is applied in such a manner as to constitute the positive electrode on the input terminal 306a side, three high voltage pulses may be generated, or two or four or more high voltage pulses may be generated. In this manner, in the period in which the voltage is applied in such a manner as to constitute the positive electrode on the input terminal 306a side, a plurality of high voltage pulses are generated from the second starting unit 306, and accordingly the starting/lighting of the high intensity discharge lamp 3 can further be advanced.

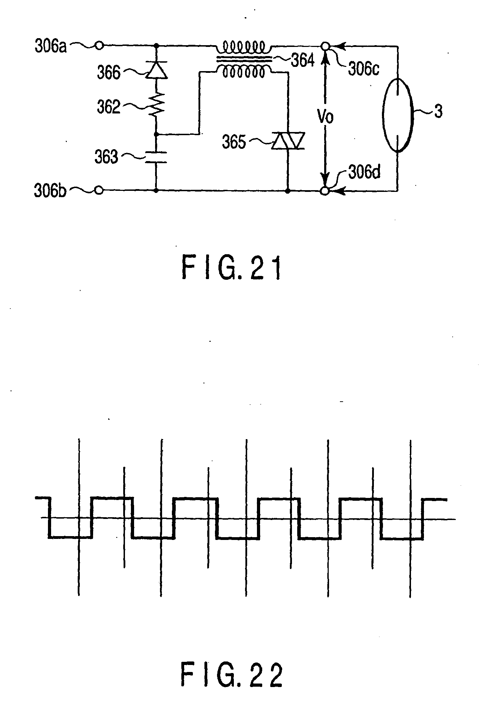

In Fig 21, the lighting device 2 has the same constitution of FIG. 14.

In a second starting unit 5 connected to the output terminals 30a, 30b of the lighting device 2 via wirings 5a, as shown in FIG. 21, a reversed diode 366 is used instead of the diode 361. That is, a cathode of the diode 366 is connected to the input terminal 306a, and an anode of the diode 366 is connected to a capacitor 363 via a resistance 362.

Moreover, in the second starting unit 5, when the other polarity from the lighting device 2, that is, a rectangular-wave voltage constituting a positive electrode on an input terminal 306b side is input, a charged current flows via the capacitor 363, resistance 362, and diode 366, and the capacitor 363 is charged. When the charged voltage of the capacitor 363 reaches the breakover voltage of the bidirectional two-terminal thyristor 365 before long by the charging, the bidirectional two-terminal thyristor 365 conducts. When the bidirectional two-terminal thyristor 365 conducts, the discharged current from the capacitor 363 momentarily flows through the primary winding of the igniter transformer 364, and a high voltage pulse of several kilovolts is generated in the secondary winding of the igniter transformer 364.

In this manner, a voltage shown in FIG. 22 is applied to the high intensity discharge lamp 3 from the output terminals 306c, 306d of the second starting unit 5. That is, the high voltage pulse from the first starting unit 4 is applied to the high intensity discharge lamp 3 in one polarity of a rectangular-wave voltage for alternately reversing the polarity output from the lighting device 2, and the high voltage pulse from the second starting unit 5 is applied to the high intensity discharge lamp 3 in the other polarity. When the application of the high voltage pulse is repeated, the high intensity discharge lamp 3 is securely started/lit. That is, the high intensity discharge lamp 3 can be securely started/lit by the high voltage pulse from the first starting unit 4 and the high voltage pulse from the second starting unit 5. Additionally, since the polarity generated by the high voltage pulse from the first starting unit 4 is set to be different from that generated by the high voltage pulse from the second starting unit 5, two high voltage pulses are not superimposed, and an unnecessarily high voltage pulse can be prevented from being applied to the high intensity discharge lamp 3. Furthermore, the need for adjustment for switching the high voltage pulse generated in the lighting device 2 can be obviated.

After the high intensity discharge lamp 3 lights, the outputs of the high voltage pulses from the first starting unit 4 and second starting unit 5 are stopped. In this manner, after the high intensity discharge lamp 3 lights, the high voltage pulses from both the first starting unit 4 and the second starting unit 5 can be securely stopped. Accordingly, the noise generation or the like can be minimized.

It is to be noted that, needless to say, in the other respects, even in the present embodiment, functions/effects similar to those of the above-described ninth embodiment are obtained.

Next, an illuminating apparatus has the same constitution as FIG 13 and the effect is same as forementioned.

### First Embodiment of the invention.

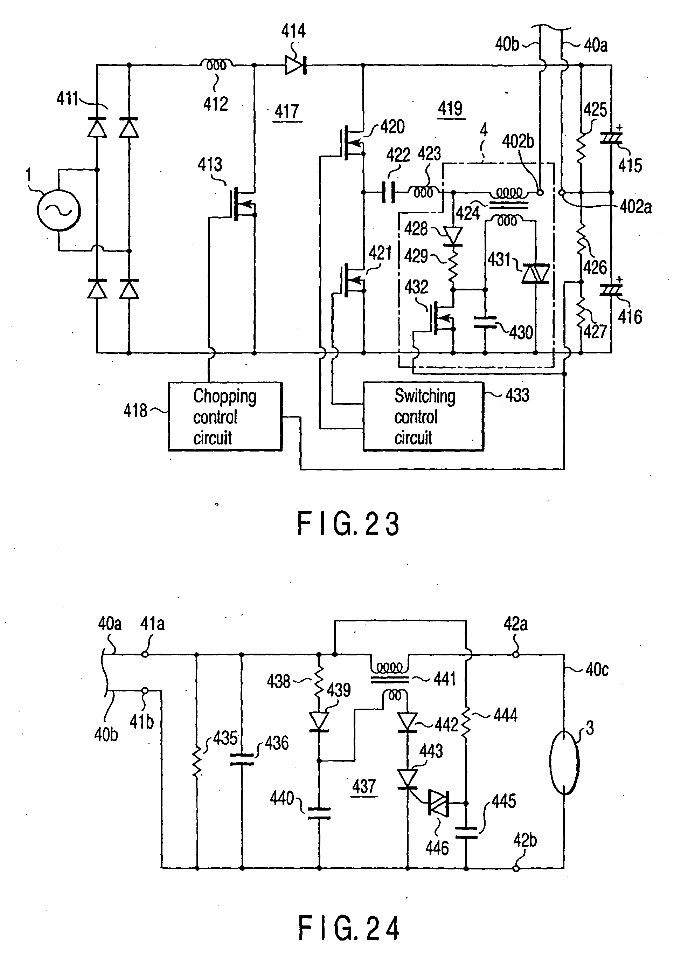

A constitution of the lighting device 2 will be concretely described. As shown in FIG. 23, the commercial alternating-current power source 1 is connected to an input terminal of a transmission-wave rectification circuit 411 constituted of a diode bridge, an output terminal of the transmission-wave rectification circuit 411 is connected in parallel with a MOS type first electric field transistor (FET) 413 via a first inductor 412 in series. Moreover, a series circuit of a pair of smoothing capacitors 415, 416 constituted of electrolytic capacitors is connected in parallel with the first FET 413 via a diode 414 in a forward direction.

The first inductor 412, first FET 413, diode 414, and smoothing capacitors 415, 416 constitute a booster chopper circuit 417. In the booster chopper circuit 417, a chopping control circuit 418 is electrically arranged, and the FET 413 is controlled to turn on/off by the chopping control circuit 418.

An inverter circuit 419 is connected to an output terminal of the booster chopper circuit 417, that is, between opposite ends of the series circuit of the smoothing capacitors 415, 416. In the inverter circuit 419, the series circuit of the smoothing capacitors 415, 416 is connected in parallel with a series circuit of MOS type second, third FETs 420, 421, a connection point between the smoothing capacitors 415, 416 is connected to an output terminal 402a, and a connection point between the second, third FETs 420, 421 is connected to an output terminal 402b via a capacitor 422 and a second inductor 423 and further via the secondary winding of an igniter transformer 424 constituting the first starting unit 4.

The smoothing capacitor 415 is connected in parallel with a resistance 425 for distinguishing types, and the smoothing capacitor 416 is connected in parallel with a series circuit of resistances 426, 427.

The first starting unit 4 is constituted by a high voltage pulse generation circuit in which the third FET 421 is connected in parallel with a series circuit of a diode 428, a resistance 429, and a capacitor 430 via a series circuit of the capacitor 422 and second inductor 423, and the capacitor 430 is connected in parallel with a series circuit of the primary winding of the igniter transformer 424 and a bidirectional two-terminal thyristor 431. The capacitor 430 is connected in parallel with the MOS type fourth FET 432. The inverter circuit 419 alternately turns on/off the respective FETs 420, 421 at a desired low frequency by a switching control circuit 433.

The second starting unit 5 receives a supply of a low-frequency power from the lighting device 2 to operate, and, as shown in FIG. 24, a resistance 435 for distinguishing types and a capacitor 436 for absorbing high voltage pulses are connected between input terminals 42, 43. The resistance 435 is set to a resistance value determined in accordance with the type of the second starting unit 5. It is to be noted that the types include a performance of the second starting unit 5, the type of the high intensity discharge lamp 3 connected together with the second starting unit 5 (type or rated power of the lamp) and the like.

A series circuit of the resistance 425 of the lighting device 2 and the resistance 435 constitutes a distinction circuit for distinguishing the type of the second starting unit 5. The capacitor 436 constitutes high voltage pulse reduction means for absorbing and reducing the high voltage pulse.

The capacitor 436 is connected to high voltage pulse generation means 437. In the high voltage pulse generation means 437, the capacitor 436 is connected in parallel with a capacitor 440 via a resistance 438 and a diode 439 in series, and the capacitor 440 is connected in parallel with a unilateral three-terminal thyristor 443 via the primary winding of an igniter transformer 441 and a diode 442 in series. The capacitor 436 is connected in parallel with a series circuit of a resistance 444 and a capacitor 445. Moreover, a bidirectional two-terminal thyristor 446 is connected between a gate of the three-terminal thyristor 443, and a connection point between the resistance 444 and the capacitor 445.

In the constitution, in the lighting device 2, a power voltage is boosted by the on/off operation of the first FET 413, the boosted direct-current voltage is charged into the smoothing capacitors 415, 416, and this direct-current voltage is supplied to the inverter circuit 419. In the inverter circuit 419, the second, third FETs 420, 421 are controlled to alternately turn on/off in a low frequency cycle. Accordingly, a low-frequency power is output between output terminals 402a, 402b of the inverter circuit 419, and supplied to the second starting unit 5 via wirings 40a, 40b.

On the other hand, since the lighting device 2 is connected to the second starting unit 5 via the wirings 40a, 40b, the resistance 425 for distinguishing the types of the lighting device 2 and the resistance 435 for distinguishing the types in the second starting unit 5 are connected in series between the output terminals 402a, 402b of the lighting device 2 via the wirings 40a, 40b. Accordingly, when the low-frequency power is supplied to the second starting unit 5 from the lighting device 2, a predetermined voltage is generated in the output terminal 402a, and the voltage is divided by the resistances 426, 427 and supplied to the chopping control circuit 418. The divided voltage indicates the type of the second starting unit 5, and the high voltage pulse generated with respect to an input voltage.

Therefore, when the divided voltage is input, the chopping control circuit 418 controls a switching duty of the first FET 413 to control the direct-current voltage to be supplied to the inverter circuit 419. The voltage charged into the capacitor 430 in a high voltage pulse generation circuit is proportional to the direct-current voltage. Since the high voltage pulse is proportional to the charged voltage of the capacitor 430, the voltage can be controlled in such a manner as to generate an appropriate high-voltage pulse to the high intensity discharge lamp 3 from the second starting unit 5. In this manner, the low-frequency output voltage supplied to the second starting unit 5 from the lighting device 2 is controlled in such a manner as to generate an appropriate high-voltage pulse in the high intensity discharge lamp 3 from the second starting unit 5.

Moreover, the voltage divided by the resistances 426, 427 is supplied to the fourth FET 432, and the FET 432 is turned on. Accordingly, since the capacitor 430 is short-circuited, the operation of the first starting unit 4 is stopped. In this manner, when it is judged that the second starting unit 5 is connected between the lighting device 2 and the high intensity discharge lamp 3, the operation of the first starting unit 4 can be stopped. Accordingly, an unnecessary high voltage pulse can be prevented from being supplied to the second starting unit 5 from the lighting device 2, and adverse affects onto the second starting unit 5 by the high voltage pulse can be removed.

Moreover, if the fourth FET 432 breaks down, and the capacitor 430 is not short-circuited, the capacitor 430 is charged via the diode 428 and resistance 429. In this case, when the charged voltage of the capacitor 430 reaches the breakover voltage of the bidirectional two-terminal thyristor 431, the two-terminal thyristor 431 conducts. Therefore, the charges of the capacitor 430 flow through the primary winding of the igniter transformer 424, and the high voltage pulse is generated in the secondary winding, and supplied to the second starting unit 5. However, even when this situation is generated, the capacitor 436 absorbs the high voltage pulse from the lighting device 2 to prevent adverse affects into the apparatus, because the second starting unit 5 is connected to the capacitor 436 for absorbing the high voltage pulse.

When the low-frequency power is supplied to the second starting unit 5 from the lighting device 2, and when the input terminal 41a is the positive electrode in the second starting unit 5, the capacitor 440 is charged via the resistance 438 and diode 439. The capacitor 445 is charged via the resistance 444. Moreover, when the charged voltage of the capacitor 445 reaches the breakover voltage of the bidirectional two-terminal thyristor 446, the two-terminal thyristor 446 conducts.

When the bidirectional two-terminal thyristor 446 conducts, the three-terminal thyristor 443 conducts, the discharged current from the capacitor 440 momentarily flows through the primary winding of the igniter transformer 441, and a high voltage pulse of several kilovolts is generated in the secondary winding of the igniter transformer 441 and applied to the high intensity discharge lamp 3. In this case, the high voltage pulse applied to the high intensity discharge lamp 3 is adjusted into an appropriate crest value by the control of the low-frequency voltage from the lighting device 2. Therefore, an unnecessarily high video pulse does not have to be applied to the high intensity discharge lamp 3.

Moreover, when the high intensity discharge lamp 3 starts lighting, the lamp voltage drops, subsequently the charged voltage of the capacitor 445 does not reach the breakover voltage of the bidirectional two-terminal thyristor 446, and the output of the high voltage pulse from the second starting unit 5 is stopped. In this manner, after the high intensity discharge lamp 3 lights, the generation of the high voltage pulse can be securely stopped. Moreover, after the lighting, the lighting is maintained by the low-frequency power from the lighting device 2.

It is to be noted that when the high intensity discharge lamp 3 is directly connected to the lighting device 2 via the short wiring, the first starting unit 4 in the lighting device 2 operates, and the high voltage pulse is applied to the high intensity discharge lamp 3 from the first starting unit 4. Moreover, the high intensity discharge lamp 3 lights.

### Second Embodiment of the invention.

The present embodiment provides a modification of the second starting unit 5. It is to be noted that the same parts as those of the first embodiment are denoted with the same reference numerals and detailed description thereof is omitted. The constitution of the lighting device 2 is the same as that of the first embodiment, and the whole constitution is the same as that of FIG. 23.

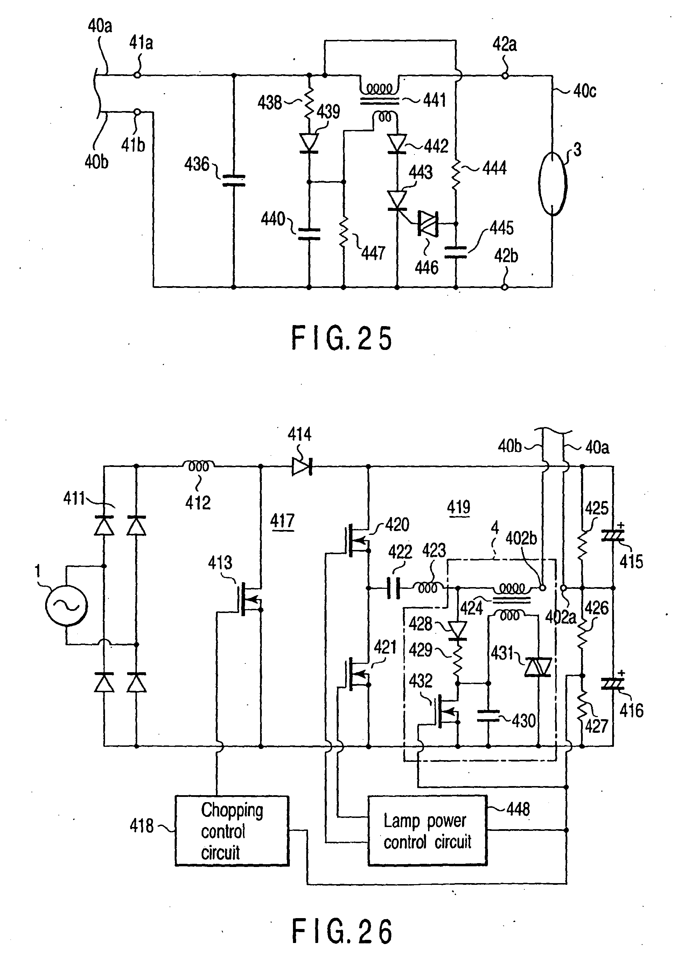

In the second starting unit 5, as shown in FIG. 25, instead of the resistance 435 for distinguishing the types in the first embodiment, a capacitor 440 is connected in parallel with a resistance 447 for distinguishing the types. The other constitutions are the same as those of the first embodiment.

In the present embodiment, a resistance 425 for distinguishing the type of a lighting device 2, a resistance 438, a diode 439, and the resistance 447 for distinguishing the types constitute a distinction circuit. That is, a series circuit of the resistance 425, resistance 438, diode 439, and resistance 447 is connected between output terminals 402a, 402b of the lighting device 2 via wirings 40a, 40b.

Accordingly, when a low-frequency power is supplied to the second starting unit 5 from the lighting device 2, a predetermined voltage is generated in the output terminal 402a, and the voltage is divided by the resistances 426, 427 and supplied to a chopping control circuit 418. Moreover, the chopping control circuit 418 inputs the divided voltage, controls the switching frequency of the first FET 413, and controls the lighting device 2 in such a manner as to generate an appropriate high voltage pulse in the high intensity discharge lamp 3 from the second starting unit 5.

Therefore, even in the present embodiment, the low-frequency output voltage supplied to the second starting unit 5 from the lighting device 2 is appropriately controlled in such a manner that an appropriate high voltage pulse is generated in the high intensity discharge lamp 3 from the second starting unit 5, and the high voltage pulse controlled into an appropriate crest value is applied to the high intensity discharge lamp 3. It is to be noted that in the other respects, functions/effects similar to those of the above-described embodiment are produced.

It is to be noted that, needless to say, the constitution of the distinction circuit is limited to the above-described first and second embodiments.

### Third Embodiment of the invention.

The present embodiment provides a modification of the lighting device 2. It is to be noted that the same parts as those of the above-described embodiments are denoted with the same reference numerals and detailed description thereof is omitted. A second starting unit 5 has a constitution of FIG. 24 used in the first embodiment, or a constitution of FIG. 25 used in the second embodiment. The whole constitution is the same as that of FIG. 3.

In the lighting device 2, as shown in FIG. 26, instead of the switching control circuit 433, a lamp power control circuit 448 is used. The lamp power control circuit 448 inputs a divided voltage is input from a connection point between resistances 426, 427 to distinguish the type of the connected second starting unit 5, and accordingly controls switching duties of FETs 420, 421 of an inverter circuit 419 to change a lamp power. That is, the second starting unit 5 is electrically arranged for the high intensity discharge lamp 3. When the type of the second starting unit 5 is distinguished, a lamp output of the connected high intensity discharge lamp 3 can be known, and therefore the lamp power can be appropriately controlled in accordance with the high intensity discharge lamp 3. It is to be noted that with respect to the other respects, functions/effects similar to those of the above-described first and second embodiments are produced.

It is to be noted that in the first and second embodiments, it has been described that the connection of the second starting unit 5 is distinguished to stop the operation of the first starting unit 4 in the lighting device 2, and the capacitor 436 for absorbing the high voltage pulse from the first starting unit 4 is electrically arranged in the second starting unit 5. However, the capacitor 436 for absorbing the high voltage pulse may be omitted as long as the function of stopping the operation of the first starting unit 4 is held. When the lighting device 2 does not have the function of stopping the operation of the first starting unit 4, the capacitor 436 for absorbing the high voltage pulse needs to be electrically arranged in the second starting unit 5.

Moreover, in the above-described first and second embodiments, it has been described that the capacitor is used as the high voltage pulse reduction means for reducing the high voltage pulse in the second starting unit 5, but the present invention is not limited to the embodiments. A combination of an inductor and a capacitor, a varistor, a Zener diode, or a discharge gap element may be used. When the capacitor is used, a function of absorbing and reducing the high voltage pulse is held. When the varistor, Zener diode, or discharge gap element is used, a function of suppressing and reducing the high voltage pulse is held.

Next, an illuminating apparatus has the same constitution as the forementioned FIG 13.

In the illuminating apparatus constituted in this manner, a low-frequency output voltage supplied to the second starting unit 5 from the lighting device 2 is appropriately controlled in such a manner that an appropriate high voltage pulse is generated in the high intensity discharge lamp 3 from the second starting unit 5. Therefore, the high voltage pulse controlled into an appropriate crest value is applied to the high intensity discharge lamp 3, and the high intensity discharge lamp 3 can be securely started/lit without imposing any excessive burden onto the lamp.

## Claims

1. A high intensity discharge lamp lighting device comprising:
a lighting device (2) which contains a first starting unit (4) arranged to generate a high voltage pulse capable of starting a high intensity discharge lamp (3); and
a second starting unit (5) provided to generate a new high voltage pulse for starting the lamp (3) located near the second starting unit (5) and provided remotely from lighting device (2), the second starting unit (5) being connected with the lighting device (2) via a cable (40a, 40b) and having a pulse reduction means (436) for reducing the high voltage pulse generated from the first starting unit (4), **characterized by** further comprising:
a distinction circuit (425-427, 435, 432, 430) arranged to stop the operation of the first starting unit (4) when the high intensity discharge lamp (3) is connected to the second starting unit (5).

2. The high intensity discharge lamp lighting device according to claim 1, **characterized in that** the pulse reduction means has a capacitor (436).

3. The high intensity discharge lamp lighting device according to claim 1, **characterized in that** high voltage pulses generated from the first and second starting units (4, 5) are arranged to have different timings from each other.

4. The high intensity discharge lamp lighting device according to claim 1, **characterized in that** the distinction circuit includes first and second resistors (425, 435) connected in series via the cable (40a, 40b) between an output terminal of the first starting unit (4) and an input terminal to the second starting unit (5) the distinction circuit being arranged to detect a division voltage at a connection node of the first and second resistors (425, 435), the division voltage representing whether the second starting unit (5) is connected between the first starting unit (4) and the high intensity discharge lamp (3).

5. The high intensity discharge lamp lighting device according to claim 1, **characterized in that** the distinction circuit includes first and third resistors (425, 438), a diode (439) and a resistor (447) connected in series via the cable (40a, 40b) between output terminals (402a, 402b) of the lighting unit (2) for generating a detecting voltage at the output terminal (402a) representing whether the second starting unit (5) is connected between the first starting unit (4) and the high intensity discharge lamp (3).

6. An illuminating apparatus comprising:
an illuminating appliance (101) arranged to support a high intensity discharge lamp (3); and
a high intensity discharge lamp lighting device according to any one of claims 1 to 5, which is arranged to light/control the high intensity discharge lamp (3) of the illuminating appliance (101).

## Patentansprüche

1. Zündvorrichtung für eine Hochleistungsentladungslampe, mit
einer Zündvorrichtung (2), die eine erste Starteinheit (4), die zum Erzeugen eines Hochspannungspulses, der dazu in der Lage ist, eine Hochleistungsentladungslampe (3) zu starten, angeordnet ist, enthält, und
einer zweiten Starteinheit (5), die zum Erzeugen eines neuen Hochspannungspulses zum Starten der Lampe (3), die in der Nähe der zweiten Starteinheit (5) angeordnet ist und entfernt von der Zündvorrichtung (2) vorgesehen ist, vorgesehen ist, wobei die zweite Starteinheit (5) über ein Kabel (40a, 40b) mit der Zündvorrichtung (2) verbunden ist und ein Pulsverringerungsmittel (436) zum Verringern des Hochspannungspulses, der von der ersten Starteinheit (4) erzeugt wird, aufweist, ferner **gekennzeichnet durch**
eine Unterscheidungsschaltung (425-427, 435, 432, 430), die dazu angeordnet ist, den Betrieb der ersten Starteinheit (4) zu stoppen, wenn die Hochleistungsentladungslampe (3) mit der zweiten Starteinheit (5) verbunden ist.

2. Zündvorrichtung für eine Hochleistungsentladungslampe nach Anspruch 1, **dadurch gekennzeichnet, dass** das Pulsverringerungsmittel einen Kondensator (436) aufweist.

3. Zündvorrichtung für eine Hochleistungsentladungslampe nach Anspruch 1, **dadurch gekennzeichnet, dass** Hochspannungspulse, die von der ersten und der zweiten Starteinheit (4, 5) erzeugt werden, so angeordnet sind, dass sie zueinander unterschiedliche Zeitpunkte aufweisen.

4. Zündvorrichtung für eine Hochleistungsentladungslampe nach Anspruch 1, **dadurch gekennzeichnet, dass** die Unterscheidungsschaltung einen ersten und einen zweiten Widerstand (425, 435), die über das Kabel (40a, 40b) zwischen einem Ausgangsanschluss der ersten Starteinheit (4) und einem Eingangsanschluss der zweiten Starteinheit (5) in Reihe verbunden sind, aufweist, wobei die Unterscheidungsschaltung zum Detektieren einer Teilspannung an einem Verbindungsknoten des ersten und des zweiten Widerstands (425, 435) angeordnet ist, wobei die Teilspannung darstellt, ob die zweite Starteinheit (5) zwischen der ersten Starteinheit (4) und der Hochleistungsentladungslampe (3) verbunden ist.

5. Zündvorrichtung für eine Hochleistungsentladungslampe nach Anspruch 1, **dadurch gekennzeichnet, dass** die Unterscheidungsschaltung einen ersten und einen dritten Widerstand (425, 438), eine Diode (439) und einen Widerstand (447), die über das Kabel (40a, 40b) zwischen Ausgangsanschlüssen (402a, 402b) der Zündeinrichtung (2) zum Erzeugen einer Detektionsspannung an dem Ausgangsanschluss (402a), die darstellt, ob die zweite Starteinheit (5) zwischen der ersten Starteinheit (4) und der Hochleistungsentladungslampe (3) verbunden ist, in Reihe verbunden sind, aufweist.

6. Beleuchtungsvorrichtung mit
einer Beleuchtungseinrichtung (101), die zum Tragen einer Hochleistungsentladungslampe (3) angeordnet ist, und
einer Zündvorrichtung für eine Hochleistungsentladungslampe nach einem der Ansprüche 1 bis 5, die zum Zünden/Steuern der Hochleistungsentladungslampe (3) der Beleuchtungseinrichtung 101 angeordnet ist.

## Revendications

1. Dispositif d'éclairage à lampe de décharge de grande intensité comprenant :
un dispositif d'éclairage (2) qui contient une première unité d'amorçage (4) agencée pour générer une impulsion de haute tension capable d'amorcer une lampe de décharge de grande intensité (3) ; et
une deuxième unité d'amorçage (5) fournie pour générer une nouvelle impulsion de haute tension pour amorcer la lampe (3) située à proximité de la deuxième unité d'amorçage (5) et fournie à distance du dispositif d'éclairage (2), la deuxième unité d'amorçage (5) étant connectée au dispositif d'éclairage (2) par le biais d'un câble (40a, 40b) et ayant un moyen de réduction d'impulsion (436) pour réduire l'impulsion de haute tension générée de la première unité d'amorçage (4), **caractérisé en ce qu'**il comprend en outre :
un circuit de distinction (425-427, 435, 432, 430) agencé pour arrêter le fonctionnement de la première unité d'amorçage (4) lorsque la lampe de décharge de grande intensité (3) est connectée à la deuxième unité d'amorçage (5).

2. Dispositif d'éclairage à lampe de décharge de grande intensité selon la revendication 1, **caractérisé en ce que** le moyen de réduction d'impulsion a un condensateur (436).

3. Dispositif d'éclairage à lampe de décharge de grande intensité selon la revendication 1, **caractérisé en ce que** les impulsions de haute tension générées à partir des première et deuxième unités d'amorçage (4, 5) sont agencées pour avoir des timings différents l'une de l'autre.

4. Dispositif d'éclairage à lampe de décharge de grande intensité selon la revendication 1, **caractérisé en ce que** le circuit de distinction comprend des première et deuxième résistances (425, 435) connectées en série par le biais du câble (40a, 40b) entre une borne de sortie de la première unité d'amorçage (4) et une borne d'entrée de la deuxième unité d'amorçage (5), le circuit de distinction étant agencé pour détecter une tension de division à un noeud de connexion des première et deuxième résistances (425, 435), la tension de division représentant si la deuxième unité d'amorçage (5) est connectée entre la première unité d'amorçage (4) et la lampe de décharge de grande intensité (3).

5. Dispositif d'éclairage à lampe de décharge de grande intensité selon la revendication 1, **caractérisé en ce que** le circuit de distinction comprend des première et troisième résistances (425, 438), une diode (439) et une résistance (447) connectées en série par le biais du câble (40a, 40b) entre les bornes de sortie (402a, 402b) de l'unité d'éclairage (2) pour générer une tension de détection à la borne de sortie (402a) représentant si la deuxième unité d'amorçage (5) est connectée entre la première unité d'amorçage (4) et la lampe de décharge de grande intensité (3).

6. Appareil d'illumination comprenant :
un élément d'illumination (101) agencé pour supporter une lampe de décharge de grande intensité (3) ; et
un dispositif d'éclairage à lampe de décharge de grande intensité selon l'une quelconque des revendications 1 à 5, qui est agencé pour éclairer/commander la lampe de décharge de grande intensité (3) de l'élément d'illumination (101).
